# EUROPEAN PATENT SPECIFICATION

(11) **EP 1 008 056 B1**
(45) Date of publication and mention of the grant of the patent: **24.01.2007**
(21) Application number: 98942106.0
(22) Date of filing: 18.08.1998
(51) Int. Cl.: H04L 12/18, H04L 12/58

(54) **CERTIFIED MESSAGE DELIVERY AND QUEUING IN MULTIPOINT PUBLISH/SUBSCRIBE COMMUNICATIONS**
ZUSTELLUNG UND SETZEN IN EINE WARTESCHLANGE VON ZERTIFIZIERTEN NACHRICHTEN IN EINEM MEHRPUNKT-PUBLIKATIONS/ABONNEMENT-KOMMUNIKATIONSSYSTEM
LIVRAISON ET MISE EN ATTENTE CERTIFIEES DE MESSAGES DANS DES COMMUNICATIONS A DIFFUSION/ABONNEMENT MULTIPOINT

(30) Priority: 18.08.1997 US 56342 P
(43) Date of publication of application: 14.06.2000
(73) Proprietor: Tibco Software, Inc., Palo Alto, CA 94301 (US)
(72) Inventor: COLLISON, Derek, L., Foster City, CA 94404 (US); LESHCHINER, Dan, Mountain View, CA 94040 (US); PAGE, Dennis, R., Mountain View, CA 94043-4943 (US)
(74) Representative: Kindermann, Manfred
(86) International application number: PCT/US1998/017115
(87) International publication number: WO 1999/009490

(56) References cited:
- EP-A- 0 258 867
- WO-A-95/10805
- WO-A-97/10558
- US-A- 4 356 550
- US-A- 5 003 473
- US-A- 5 136 501
- US-A- 5 555 404
- US-A- 5 557 798
- US-A- 5 680 551

## Description

### BACKGROUND TO THE INVENTION

### Technical Field

This invention relates to multipoint publish/subscribe communications and, more particularly, to certified message delivery and queuing between multipoint computer-based publisher and subscriber applications.

### Background

In a typical anonymous public/subscribe technologies -- such as described in US patents 5,557,798; 5,339,392; 5,257,369 and 5,187,787 -- a publisher application publishes information to requesting or subscriber applications without having any knowledge of the number, identity or address of any such subscriber applications. In fact, no subscriber applications may exist. Instead of knowing about subscribers, a publisher will merely publish information applying a context or subject "label" to the published message. A subscriber then identifies desired messages by the content label and receives only those messages relevant to the desired content.

The advantages of such a publish/subscribe, content-based addressing systems are well known and include the ability to decouple subscribers and publishers from one another. This decoupling allows publishers and subscribers to operate without having any knowledge of the identity, location or address, or communication protocols of each other. The flexibility that this offers is enormous and, accordingly, such content/subject-based addressing communication-environments are becoming increasingly popular.

Unfortunately, the very advantages (such as anonymous decoupling) of these systems, precludes the use of conventional reliable messaging protocols such as TCP. TCP, and other reliable messaging protocols apply only in point-to-point type of communications. In these point-to-point communications message senders and receivers are directly linked to one another and therefore know each other's addresses and locations.

Unfortunately, these reliable messaging protocols -- that guarantee arrival and order of arrival of messages -- require advance knowledge between applications. They are, therefore, not applicable to typical publish/subscribe environments.

Yet, such reliable or certified delivery of messages is extremely important. For example, certified delivery is appropriate when a sending application requires individual confirmation of delivery for each message it sends. For example, a travelling sales representative computes sales figures on a lap-top computer, and sends them to a supervisor at the office. The user must know for certain that the data has arrived, and has been included in the supervisor's sales report.

Certified delivery is also appropriate when a receiving application cannot afford to miss any messages. For example, in an application that processes orders to buy and sell inventory items, each order is important. If any orders are omitted, then inventory records are incorrect.

In addition, certified delivery is appropriate when each message on a specific subject builds upon information in the previous message with that subject. For example, a sending program updates a receiving database, contributing part of the data in a record, but leaving other parts of the data unchanged. The database is correct only if all updates arrive in the order they are sent.

Furthermore, certified delivery is appropriate in situations of intermittent physical connectivity--such as discontinuous network connections, for example, an application in which several mobile lap-top computers must communicate with one another. Connectivity between mobile units is sporadic, requiring persistent storage of messages until the appropriate connections are reestablished.

Thus, a very real need exists for having both the advantages of certified messaging and the advantages of content-based, anonymous publish/subscribe environments.

The prior art also comprises a multitask multiuser,system that provides for efficient transfer of data, such as stock market data, from a remote data base to individual subscribers (EP 0 258 867 - A2). In this system data of different types are received from a remote data base in response to nonmonitoring requests for data from subscribers and specific monitoring requests for data from individual subscribers. The system uses a primary provider task and further provider tasks for inquiry handling and monitoring. In the primary provider task a data stream of plural data types is divided into plural data streams according to the data types. Selected data streams are transferred, in response to nonmonitoring requests, directly to the subscribers. At least one data stream is transferred in response to specific monitoring requests to at least one second provider task which then divides the data stream in response to the specific monitoring requests into further data streams and transfers them to a user task.

This system does not deal with certified delivery of messages.

### SUMMARY OF THE INVENTION

The invention relates to a computer-based publish/subscribe system having a subscriber application that has previously subscribed to receive a particular type of message, and to a method for delivery of messages from a publisher application to the subscriber application where the publisher application and the subscriber application are part of an anonymous publish/subscribe computer system.

As defined in the claims, the invention provides for receiving, at the publisher application, a certified messaging subscription request, said certified messaging subscription request including a subscriber name identifying the subscriber application, an address where the subscriber application receives messages, and a subject name associated with and identifying the particular type of message for which a certified messaging session is to be established.

A certified messaging subscription request is received, establishing the certified messaging session with the subscriber application by adding the subscriber name to a message ledger at the publisher application, and communicating an acknowledgment message to the subscriber application, where the acknowledgment message acknowledges the establishment of the certified messaging session.

The delivery of a certified message of the particular type is attempted in accordance with the certified messaging session by assigning a sequence number to the certified message, addressing the certified message to the address where the subscriber application receives messages, communicating the certified message from the publisher application to the subscriber application, recording a delivery attempt of the certified message in the ledger, and retaining the certified message in the ledger at least until the publisher application has received a confirmation message from the subscriber application confirming receipt of the certified message at the subscriber application.

### Advantages of the Invention

The invention has a number of advantages. For example, it provides:
Certainty
   certified delivery assures application programs that every message reaches intended recipient--in the order sent. When delivery is not possible, both senders and, optionally, listeners receive explicit information about each undelivered message.
Convenience
   Once a program sends a certified message, the system continues delivery attempts until delivery succeeds, or until the message's time limit expires.
Control
   Application programs determine an explicit time limit for each message.
   Sending applications can disallow certified delivery to specific listening sessions.
Detail
   The system can also present advisory messages to inform
   application programs of every significant event relating to delivery.
Process-Based or File-Based Recording
   The system can also record the status of each message in a
   ledger. Applications that require certification only for the duration of the application
   process can choose a process-based ledger. Applications that require certification that
   transcends process termination and restart can choose a file-based ledger.

The invention will be described in greater detail below with reference to the accompanying drawings.

### DESCRIPTION OF THE DRAWINGS

In the attached drawings:
Figure 1 is a schematic representation of a typical publish/subscribe environment useful for illustrating this invention; and
Figure 2 is a schematic representation of a typical publish/subscribe environment useful in illustrating the distributed queuing and task scheduling aspects of the invention.

### SPECIFIC DESCRIPTION

### OVERVIEW

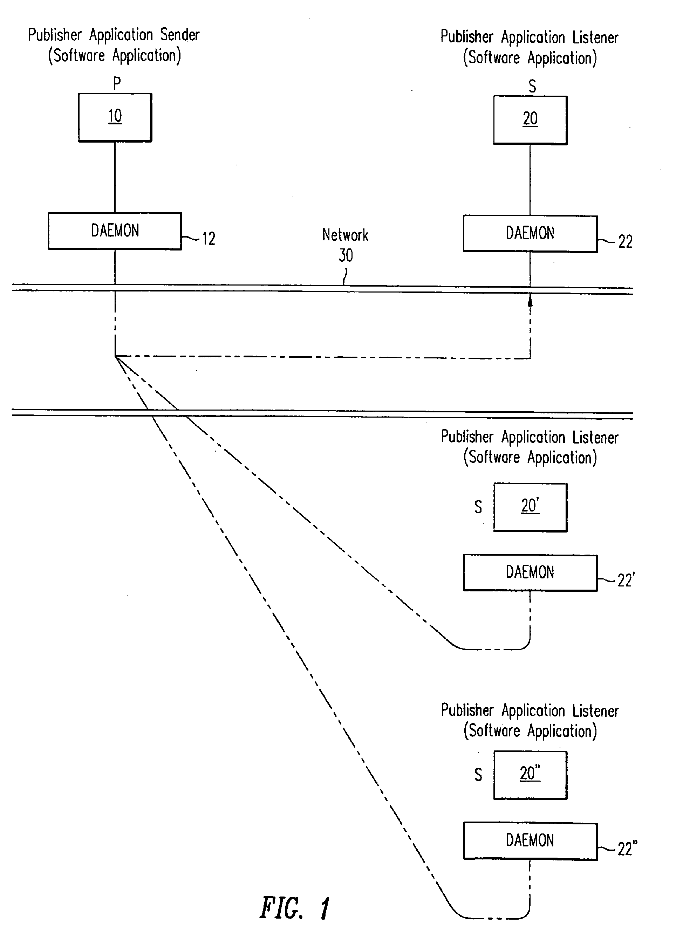

Figure 1 shows a publisher application (sender) 10 and a plurality of subscriber applications (listeners) 20, 20' and 20". In the preferred embodiment of this invention the publisher and subscriber(s) are software applications based on one or more computers interconnected by a network 30 providing a data path among the applications. The publisher 10 and subscriber(s) 20 preferably implement a content-based communications protocol whereby a publisher publishes a message indicating only the content of the message and without knowing the identity or protocols used by the subscriber(s) 20. These inter-application communications are established by communications daemons 12 (associated with a publisher/sender) and 22, 22' and 22" (associated with the subscriber/listener 20, 20' and 20"). The arrangement shown in this figure is well known and described in many publications including the patents referred to above.

As is described in much greater detail below, a listener 20 can register with a specific publisher 10 to receive certified messages. This communication includes the subscribers name, its "inbox" address and the subject/content of messages it requires information on. Thus the publisher 10 will have a list of subscriber names and inboxes (but know nothing else about the subscriber) for all subscribers wishing to receive certified messages. The publisher/sender 10 will therefore expect an acknowledgement of each message it sends out; an acknowledgement it would receive from a subscriber/listener 20, 20' and/or 20". Importantly, if the publisher/sender 10 does not receive the acknowledgement, it sends an acknowledgement request message, usually for a predetermined time or number of "sends."

In the event the subscriber wishes to have guaranteed delivery of messages, the publisher can save the message to disk (or other storage) until an acknowledgement of subscriber receipt occurs. Thus, until message times out, the subscriber can, at a later date, receive the message by contacting the publisher. This would usually happen where messages are very dependent on their sequence or build upon prior message. In these circumstances missing/unreceived messages could be catastrophic. Also, in these (and in most certified messaging applications of this invention) each certified message is assigned a tracking number. This allows both sender and listener/subscriber to monitor which messages are received and/or missing.

In many applications, data communications are highly reliable, but in some situations applications require even stronger assurances of delivery. Certified delivery features offers greater certainty of delivery even in situations where processes and their network connections are unstable.

### CERTIFIED MESSAGING

### Enabling a Delivery-Tracking Session

The first step toward certified delivery is to enable a delivery-tracking session. A delivery-tracking session begins as an ordinary anonymous publish/subscribe session; enabling a session adds information so that it can participate in certified delivery protocols. The additional information includes a name and a ledger.

Delivery-tracking sessions can send and receive messages, just as ordinary sessions can. In addition, delivery-tracking sessions can participate in certified delivery calls (that is, calls in the rvcm library layer); ordinary sessions cannot participate in these calls. (Notice the asymmetry. Delivery-tracking sessions can participate in ordinary calls, but ordinary sessions cannot participate in certified delivery calls.)

### Name

Each delivery-tracking session has a name which may be reusable, or non-reusable. The name identifies the session to other delivery-tracking sessions, and is part of the label that identifies outbound messages from the session.

A name is reusable when a program supplies it explicitly to the enabling call. When a session with a reusable name also has a file-based ledger, it operates as an instance of a persistent correspondent--which allows continuity of certified delivery beyond session termination and program restarts.

Two delivery-tracking sessions must not bind the same reusable name that is, at any moment in time, each reusable name must be unique. Sessions may reuse a name sequentially, but not simultaneously. Violating this rule can significantly obstruct certified delivery. Typically, session names have the same syntax as subject names.

Programs may omit a name in the enabling call--in which case the call generates a unique, non-reusable name for the session. No other session on any computer can ever have the same name. As a result, a session with a non-reusable name operates as a transient correspondent--no subsequent session can continue the certified delivery behavior of the session.

Enabling a delivery-tracking session creates a ledger for it. Certified delivery software uses the ledger to record information about every unresolved outbound certified message, every subject for which this session receives (inbound) certified messages, and other cooperating delivery-tracking sessions.

Programs may store the ledger in a ledger file, or in process-based storage within the running program. (Even when a session uses a ledger file, it may sometimes replicate parts of the ledger in process-based storage for efficiency; however, programmers cannot rely on this replication.)

Ledger files must be unique. That is, two sessions must not use the same ledger file (concurrently). If an operating system supports raw disk devices (also called raw partitions), a device can be specified as the ledger file.

A session with a file-based ledger and a reusable name qualifies as a persistent correspondent, with certified delivery behavior that can extend beyond session termination.

### Labeled Messages

A labeled message is like an ordinary message, except that it includes supplementary information, which delivery-tracking sessions can use for certified message delivery:
The name of the delivery-tracking session that sent the message.
A sequence number assigned by the sending session.

### Sending a Labeled Message

Any delivery-tracking session can send a labeled message by using the sending calls in the certified message delivery library layer. Examples of such delivery-Tracking Send Calls are in the table below.

| | |
|---|---|
| C | rvcm_Send (), rvcm_SendWithReply ( ) |
| C++ | RvCmSender:: certifiedSend ( ), |
| | RvCmSender:: certifiedSendRequest ( ) |
| Java | RvCmSender. certifiedSend ( ), RvCmSender. certifiedSendRequest ( ) |

### Receiving a Labeled Message

For clarity, two kinds of listening endpoints are distinguished. An ordinary listener is a listener created with an ordinary listening call, such as the C functions rv_ListenInbox ( ) or rv_ListenSubject (). A delivery-tracking listener is a listener created with a delivery-tracking listening call, such as the C functions rvcm_ListenInbox () or rvcm_ListenSubject ().

Either type of listening endpoint can receive a labeled message---delivery-tracking listeners (created by the certified delivery library), as well as ordinary listeners.

When an ordinary listener receives a labeled message, it presents it to the appropriate callback function as if it were an ordinary message. That is, it ignores the supplementary information that distinguishes a labeled message.

When a delivery-tracking listener receives a labeled message, its behavior depends on context:
If a delivery-tracking listener is registered for certified delivery, it presents the supplementary information to the callback function.
If a delivery-tracking listener is not registered for certified delivery, it presents a "null"
   sender's name to the callback function, with a sequence number of zero.
In addition, if appropriate, the certified delivery library automatically requests that
   the sender register the listener for certified delivery.

### DISCOVERY AND REGISTRATION FOR CERTIFIED DELIVERY

### Discovery

When a delivery-tracking listener receives a labeled message from a delivery-tracking sender that is not listed in the listener's ledger, the listener "discovers" the sender on the message subject.

Three events follow discovery:
Certified delivery software adds the sender's name to the listener's ledger, as a source of messages on the subject.
Certified delivery software in the listening program contacts the sending program to request registration for certified delivery of the subject and information regarding the agreement.
Certified delivery software presents a REGISTRATION. DISCOVERY advisory to the listening program.

### Registration

When a delivery-tracking sender receives a registration request from a delivery-tracking listener, the sender automatically accepts the request. Acceptance consists of these four events:
Certified delivery software registers the listener for certified delivery of the subject--recording that fact in the sender's ledger.
Certified delivery software in the sending program notifies the listener session that the registration requested is accepted--the sender accepts responsibility for certified delivery on the subject.
Certified delivery software presents a REGISTRATION. REQUEST advisory to the sender session, informing it of the new registered listener.
When the certified delivery software in the listening program receives the acceptance reply, it presents a REGISTRATION CERTIFIED advisory to the listener session.

### CERTIFIED DELIVERY AGREEMENT

Following registration and acceptance, the sender and listener have a certified delivery agreement on the subject.
The sender is responsible to record each outbound message on that subject, and to retain the message in its ledger until it receives confirmation of delivery from the listener (or until the time limit of the message expires).
In return, the listener is responsible to confirm delivery of each message, and to request retransmission when a message arrives out of sequence.

The system arranges all of this accounting automatically. The sending and listening programs do not participate directly in these protocols--only indirectly, by sending and listening with certified delivery library calls.

Notice that a certified delivery agreement applies in one direction only--from a sender to a listener. A two-way conversation requires two separate certified delivery agreements.

We refer to the two participants in a certified delivery agreement as a certified sender and a certified listener, and the labeled messages that flow between them are certified messages. Notice the subtle difference in terminology--before establishing a certified delivery agreement, the participants are delivery-tracking senders and listeners; afterward, they are certified senders and listeners. A labeled message is only a certified message when the sender and receiver maintain a certified delivery agreement.

### DELIVERING A CERTIFIED MESSAGE

Once a delivery agreement is in place, all subsequent messages on the subject (from the certified sender to the certified listener) are certified messages. Each **certified message** generates a series of protocol events:
When the system presents a certified message to the listening callback function, it includes the sequence number assigned (automatically) by the sending Software and the publisher's name.
When the callback function returns, certified delivery software automatically confirms delivery to the sender and records confirmation to a ledger. (Programs can override this behavior and confirm delivery explicitly.)
When confirmation reaches the sending program, certified delivery software records delivery in the sender's ledger, and presents a DELIVERY.CONFIRM advisory to the sender session.
When confirmation has arrived from every certified listener for this message, certified delivery software deletes the message from the sender's ledger, and presents a DELIVERY.COMPLETE advisory to the sender session.

### Automatic Confirmation of Delivery

The default behavior of certified listeners is to automatically confirm message delivery upon return from the data callback function. Programs can selectively override this behavior for specific listening endpoints (without affecting other listening endpoints).

By overriding automatic confirmation, the listener assumes responsibility for explicitly confirming each inbound certified message.

Consider overriding automatic confirmation when processing inbound messages involves asynchronous activity, such as computations in other threads, database queries, or additional network communications.

### Requesting Confirmation

If a certified sender does not receive prompt confirmation of delivery from a certified listener (for example, because of network glitches), the system in the sending program automatically requests confirmation. After each request, it presents a DELIVERY. NO_RESPONSE advisory to the sending session.

When a listener receives a request for confirmation, it checks its ledger, and reconfirms receipt of the messages that it has already confirmed. (This behavior is identical, whether the program uses automatic confirmation, or overrides it.)

### SEQUENCING AND RETRANSMISSION

A delivery-tracking sender assigns sequence numbers serially for each outbound subject, so the sequence numbers reflect the order of messages from a sender on a specific subject.

When certified delivery software presents certified messages to a certified listener, it preserves the sequence in which the sender sent them. If a message arrives out of sequence, certified delivery software in the listener does not present it to the callback function until all the preceding messages are available.

For example, a certified listener is receiving certified delivery for the subject FOO from a sender named BAZ. After receiving and presenting message number 32, the next message to arrive is message 35. Certified delivery software holds message 35 until it can first present messages 33 and 34.

Meanwhile, the certified delivery software in FOO requests retransmission of messages 33 and 34 from Baz. In a case where the time limit on those messages has expired--so BAZ no longer has them in its ledger---certified delivery software presents a DELIVERY.UNAVAILABLE advisory to the listener, indicating that messages 33 and 34 are no longer available. Then it presents message 35 to the data callback function.

### PERSISTENT CORRESPONDENTS

We introduced the concept of persistent correspondents in the section Name, page 144.
A reusable name and a file-based ledger allow a persistent correspondent to continue certified delivery beyond the termination and restart of a session or process.

### Example

Consider an example application system, in which application program JOE generates important information, and sends it to application program SUE in certified messages on the subject REMEMBER.THIS. Upon receipt, SUE stores the information in a database.

If either JOE or SUE terminate unexpectedly, it is crucial that certified messages still arrive for entry into the database. To ensure this result, both programs must represent persistent correspondents-that is, both programs enable sessions with reusable names (JOE_PC and SUE_PC), and each program keeps a file-based ledger. In addition, SUE requires old messages when it enables the session SUE_PC.

During operation, JOE has sent message number 57 on the subject REMEMBER.THIS but has not yet received delivery confirmation for messages 53- 56. SUE is processing message 53, when a sudden hardware failure causes to terminate. Meanwhile, JOE continues to send messages 58-77.

The computer restarts, and SUE restarts. The ledger file for SUE_PC indicates that message 52 was received and confirmed for the subject REMEMBER.THIS for a given publisher as JOE_PC. On restart SUE_PC will contact JOE_PC and reestablish their certified delivery agreement. When JOE accepts, JOE_PC retransmits the stored messages 53-77 on that subject.

In the above scenario it is important to notice the following:

That SUE does not miss any REMEMBER.THIS messages. However, the new SUE must gracefully fix any difficulties caused by partial processing of message 53 by the old SUE.

JOE and SUE communicate using a broadcast subject name not an inbox. Inbox names are unique, so they cannot continue beyond session termination and restart.

### ANTICIPATING A LISTENER

In some situations, a delivery-tracking sender can anticipate the request for certified delivery from a persistent correspondent that has not yet begun listening.

Consider an example in which a database program (DB) records all messages with the subject STORE.THIS. The program DB enables a session that instantiates a persistent correspondent named DB_PC. All programs that send messages with the subject STORE.THIS depend on this storage mechanism.

One such sending program is JAN. Whenever JAN starts, it can anticipate that DB_PC will request certified delivery of the subject STORE_THIS. Suppose that JAN starts, but DB is not running, or a network disconnect has isolated JAN from DB. Anticipating that it will eventually receive a registration request for STORE.THIS from DB_PC, JAN makes an add listener call. The effect is that the software within JAN behaves as if it has a certified delivery agreement with DB_PC for the subject STORE.THIS. It stores outbound messages (on that subject) in its ledger. When DB restarts, or the network reconnects, JAN automatically retransmits all the stored messages to DB.

### CANCELLING CERTIFIED DELIVERY

Both listeners and senders can cancel a certified delivery agreement.

Listeners cancel by closing the listening endpoint, using calls listed below. Senders with certified delivery agreements to the closed endpoint receive REGISTRATION.CLOSED advisories. HOST.LISTEN.STOP advisories inform other applications of the change.

Senders can cancel certified delivery of a specific subject to a specific listener. The sender program deletes from its ledger all information about delivery of the subject to the listener. The sending program receives a REGISTRATION.CLOSED advisory. If the listening correspondent is available (running and reachable), it receives a REGISTRATION.NOT_CERTIFIED advisory. (Unlike the disallow listener calls in Table 7, these calls do not cause denial of subsequent registration requests.)

### DISALLOWING CERTIFIED DELIVERY

As described before senders automatically accept all registration requests. This is true except when the sending program explicitly disallows certified delivery to a listening session. Calls that disallow a listener cancel existing certified delivery agreements with the listener session (on all subjects), and cause certified delivery software to automatically deny subsequent registration requests from the listener session.

When a sender has disallowed a listener, the events connected with registration do not occur. Instead, certified delivery software in the sender notifies the listener session that the request is disallowed. When certified delivery software in the listening program receives the rejection notice, it presents a REGISTRATION.NOT_CERTIFIED advisory to the listening session.

Allow listener calls supersede the effect of a previous disallow listener call, allowing subsequent registration requests from the listener session to succeed.

### NO RESPONSE TO REGISTRATION REQUESTS

It is possible that a registration request never reaches the delivery-tracking sender, or the acceptance notice never reaches the listening program (for example, because of network glitches, or termination of the sending program). After repeated attempts to register without response from the sender, certified delivery software in the listening program presents a REGISTRATION.NO_RESPONSE advisory to the listening session. After several attempts to register with no response, the listener stops sending requests.

### REUSABLE NAMES

Sessions that represent persistent correspondents require reusable names. Reusable names must obey the syntax for subject names. Reusable names must not contain wildcard characters. Reusable names may not begin with reserved elements (such as _INBOX,_RV or _LOCAL). For best performance, reusable names should be kept short-only a few characters, typically no more than three or four elements, and no more than 50 characters in total.

### LEDGER STORAGE MODE

Each delivery-tracking session records information in a ledger, which occupies storage space within the application process. A session that represents a persistent correspondent must also keep a copy of the ledger in a file. The file-based ledger preserves certified delivery information beyond session (or process) termination and restart.

This feature has two associated costs:
The ledger file consumes disk space.
The application program pauses to update the ledger file at each significant event.

Transient correspondents need not pay these costs, because they do not use ledger files. However, keeping the ledger in process-based storage consumes process memory.

### Ledger Size

The size of the ledger depends on several factors---the most important of which is the retention rate of stored data. That is, the ledger grows fastest in response to the cumulative length of incompletely delivered messages.

Program developers can estimate the expected size of the ledger, and must ensure that the process can allocate sufficient memory to contain it. For a file-based ledger, ensure that sufficient disk space is available as well, as memory requirements for the process application change when utilizing a file-based ledger.

### EVENT MANAGER

The system's certified delivery depends on the event manager for timer and I/O events. When an application enables a delivery-tracking session, that session must be an event-managed session.

### No Synchronous Sessions

Synchronous sessions are not valid for certified delivery calls and all delivery-tracking sessions must be asynchronous, event-managed sessions.

### Distributed Queues

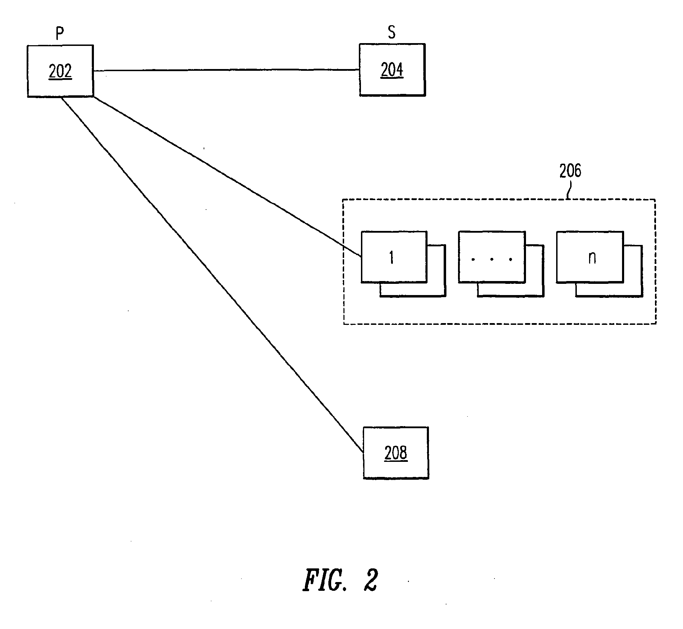

The system also provides use of distributed queues for one-of-n certified delivery. In particular, the system provides for distributed queueing of messages along with certified/guaranteed delivery in a "one-of-n" delivery mechanism.
This delivery mechanism is illustrated in Figure 2 in which a single publisher 202 is publishing messages to three registered subscribers 204, 206 and 208 respectively. One of the subscribers, 206 is a large group of n-subscribers.

Distributed queueing addresses the problem that it is undesirable for all n-subscribers in registered subscriber 206 to get every message published by publisher 202. For example, it may be undesirable because each of the n-subscribers in group 206 will take an action. In addition, if each subscriber is to receive the message (and possibly respond to it) this will consume additional network bandwidth.

Nonetheless, it is imperative (hence the need for certified/guaranteed delivery) for at least one of the n-subscribers in group 206 to receive the message. I.e., ideally the system should deliver the message to only one of the n-subscribers 206. This type of situation arises where a large number n of subscribers 206 is required to provide the desired level of fault tolerance and/or load balancing. Fault tolerance is important in situations where applications may be unstable or message delivery is absolutely critical.

In the system of the invention, each subscriber application in the group 206 operates by sending messages to another of the n-subscribers in the group 206 acting as a scheduler giving an indication of its weight. The scheduler then responds by sending the message to the particular subscriber in the group with the greatest weight. Greater details of how this is accomplished follow directly below.

Accordingly, a distributed queue of subscribing database servers 206 can accept certified messages that represent tasks (updates and queries). The system assigns each task to exactly one of the servers, while the group of servers and the distribution of tasks remains completely transparent to the client processes.

### Queue Members

The member sessions of a distributed queue all share the same reusable correspondent name indicating that they are members of the queue with that name. Each member of a distributed queue listens for the same subjects--yet even when n members listen, for each inbound message (or task), only one member processes the message.

### Member Roles-Worker and Scheduler

As used herein with respect to queueing and queued delivery, the terms "listener" and "worker" are used interchangeably. Each distributed queue member session can have two distinct roles--as a worker, and as a potential scheduler.

In the **listener or worker role**, queue member sessions support a limited subset of certified delivery calls; members can listen to a subject, override automatic confirmation of delivery and confirm delivery. Queue member sessions do not support any other certified delivery calls (in particular, calls associated with sending certified messages). However, they do support all standard calls (for example, sending ordinary messages).

The system includes fault tolerance software that maintains exactly one active scheduler in each queue; if the scheduler process terminates, another member assumes the role of scheduler. The queue member session in the **scheduler role** assigns inbound tasks to listeners in the queue. (A scheduler can assign tasks to its own listener component, but only does so when all other listeners are busy.)

### The Scheduler as a Fault-Tolerant Component

Although any queue member has the potential to become the scheduler, fault tolerance software maintains exactly one scheduler at all times. Fault tolerance parameters guide the software to select the most suited member as scheduler.

Scheduler weight represents the ability of a member session to fulfill the role of scheduler, relative to other members of the same queue, i.e., the greatest availability or unused member resources. The queue members use relative scheduler weight values to elect one member as the scheduler; members with higher scheduler weight take precedence.

The active scheduler sends heartbeat messages at the interval specified by the user.
Heartbeat messages inform other members that a member is acting as the scheduler. All sessions in the queue must specify the same scheduler heartbeat interval.

In addition, all sessions in the queue must specify the same scheduler activation interval. When the heartbeat signal from the scheduler has been silent for this interval the queue member with the greatest scheduler weight takes its place as the new scheduler.

### Assigning Tasks to Workers

The scheduler assigns each task to a worker or listener (another queue member session). That worker or listener alone processes the task message in a data callback function.

### Worker Weight

Relative worker or listener weights assist the scheduler in assigning tasks. When the scheduler receives a task, it assigns the task to the available worker or listener with the greatest worker or listener weight.

Enabling a session as a queue member tacitly sets its worker or listener weight parameter to 1. That is, all members implicitly have the same worker or listener weight, unless program code explicitly changes the worker or listener weight.

### Availability

When the scheduler receives a task, it assigns the task to the available worker listener with the greatest listener weight.

A worker listener is considered available unless either of these conditions are true:
The pending tasks assigned to the worker or listener exceed its task capacity.
The worker or listener session is the scheduler. (The scheduler assigns tasks to
its own worker or listener only when all other workers or listeners are busy.)

### Task Capacity

Task capacity is the maximum number of tasks that a worker or listener can accept.
When the number of accepted tasks reaches this maximum, the worker or listener cannot accept additional tasks until it completes one or more of them.

When the scheduler receives a task, it assigns the task to the worker or listener with the greatest worker or listener weight--unless the pending tasks assigned to that worker or listener exceed its task capacity. When the preferred worker or listener has too many tasks, the scheduler assigns the new inbound task to the worker or listener with the next greatest worker or listener weight.

Enabling a session as a queue member tacitly sets its worker or listener task capacity to 1. Programmers can tune task capacity based on two factors:
Multi-tasking program on multiprocessing hardware.
On a multiprocessing computer, a multi-threaded program that devotes n threads and n processors to inbound tasks has task capacity n.
Communication time lag.
In most distributed queue applications, the communication time is an insignificant fraction of the task turnaround time. That is, the time required to assign a task and signal its completion is very small compared to the time required to process the task itself. For example, when average task turnaround time is 2000 milliseconds, of which communication time contributes only 10 milliseconds to the total, then task capacity is the same as the number of processors or threads.

However, in some situations communication time can be significant--for example, when the queue members are distributed at distant sites connected by a WAN. When communication time is significant, the meaning of task capacity changes; instead of signifying the number of tasks that a listener can process concurrently, it signifies the number of tasks that can fill the listener's capacity despite the communication time lag.
For example, when the average task turnaround time is 1500 milliseconds, of which the average task processing time contributes 1000 milliseconds to the total, then setting the task capacity to 3 minimizes the listener's idle time between tasks.
When tuning task capacity to compensate for communication time lag, balance is critical. Underloading a listener (by setting its tasks capacity too low) can cause the listener to remain idle while it waits for the schedule to assign its next task. Conversely, overloading a listener (by setting its task capacity too high) can cause some assigned tasks to wait, while other listeners that might have accepted those tasks remain idle.

### TASK SCHEDULING

In a further application of this invention, the broad concepts of distributed queuing can be applied to scheduling tasks for different task doing applications. In this application an application can be either a scheduler or a worker or both. Each worker is assigned a weight indicating its ability to do work, usually the number of tasks it can do simultaneously. Typically, workers assign their own weights.

One application/member of a group becomes the scheduler. Once this occurs, all other applications become designated workers only. The scheduler becomes both a worker and the scheduler.

When a task is received by the group (the scheduler) it assigns the task to the worker with the highest "weight" or ability to do tasks. The worker then calls back to the scheduler accepting the task and, upon completion, returns a call to the scheduler indicating this fact. In certain instances, the call back to the scheduler includes both an acceptance and a notification of task completion.

Two Appendices, A and B are attached. These appendices include detailed C coding information respectively for Certified messaging and for message queuing.

### Appendix A: Certified Message Delivery (Programming Details for C Programmers)

As indicated previously, even though some communications are highly reliable, certain applications require even stronger assurances of delivery. Certified delivery features offers greater certainty of delivery even in situations where processes and their network connections are unstable.

This Appendix A provides programming details for C programmers wishing to implement Certified message Delivery. The Appendix provides, in Table A1, an overview listing of Certified's messaging Deliver Datatypes and Functions. Each Datatype or Function is then described in greater detail with Cross-references to related Datatypes or Functions.

### Certified Message Delivery CAPI

The following table summarizes the datatypes and functions in the certified message delivery C API.

**Table A1: Certified Message Delivery: Datatypes and Functions**

| **Item** | **Description** |
|---|---|
| rvcm_Enable () | Enable an existing session for delivery tracking. |
| rvcm_ListenSubject () | Listen for broadcast messages, and request certified delivery whenever available. |
| rvcm_Listenlnbox () | Open a delivery-tracking inbox to listen for point-to-point messages, and request certified delivery whenever available. |
| rvcm_Callback | Function type of callback functions that receive and process inbound messages for delivery-tracking listeners. |
| rvcm_ListenId | Certified listening calls return identifiers of this type. |
| rvcm_seq | Certified messages bear sequence numbers of this type. |
| rvcm_close ( ) | Close a delivery-tracking endpoint; stop listening for messages on it. |
| rvcm_Send ( ) | Send a labeled message, and track delivery to cooperating listeners. |
| rvcm_SendWithReply ( ) | Send a labeled request message, and track delivery to cooperating listeners. |
| rvcm_AddListener ( ) | Pre-register an anticipated listener. |
| rvcm_RemoveListenern() | Cancel certified delivery of a subject to a listening correspondent. |
| rvcm_DisallowListener() | Cancel certified delivery of all subjects to a listening correspondent, and deny subsequent registration requests. |
| rvcm_AllowListener() | Invite a receiver to reinstate certified delivery for its listeners. |
| rvcm NoAutoConfirm() | Override automatic confirmation of delivery. |
| rvcm_confirm() | Confirm delivery of a certified message. |
| rvcm_ReviewLedger() | Summarize the delivery status of messages in the ledger, |
| rvcm_ReviewCallback | Function type of callback functions that process ledger information for rvcm_ReviewLedger(). |
| rvcm_SyncLedgerFile() | Synchronize the ledger file. |
| rvcm_Error | Datatype. Enumerates error codes for the certified message delivery API. |
| rvcm_ErrorText() | Return a text string describing an error code. |

**rvcm_Enableo**

### Function

### Declaration

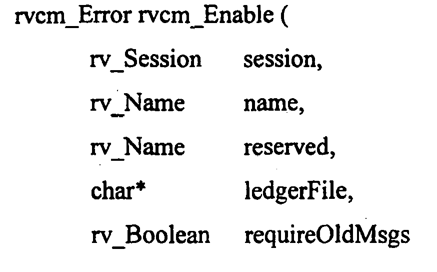

### Purpose

Enable an existing session for delivery tracking.

### Remarks

All other rvcm functions require an enabled session as an argument. Programs must call rvcm_Enable ( ) before any other calls related to certified delivery.

A user can use an enabled session for both certified and non-certified communications. For example, an enabled session supports calls to rvcm_Send ( ) and rv_Send ().

Once a session is enabled for certified delivery, it remains enabled until terminated with rv_Term ().The user cannot subsequently change the certified delivery parameters of the session.

### Name

rvcm_Enable ( ) promotes its session argument to a delivery-tracking session.

If name is NULL, then rvcm_Enable ( ) generates a unique, non-reusable name for this session.

If name is non-NULL, then the session binds that name. A correspondent can persist beyond session termination only when it has both a reusable name and a file-based ledger.

### Ledger File

Every delivery-tracking session stores the state of its certified communications in a ledger, which is stored in memory associated with the process.

If ledgerFile is NULL, then this session uses a only process-based ledger. When the session or process terminates, all information in the ledger is lost.

If ledgerFile specifies a valid file name, then this session uses that file for ledger storage. If the session or process terminates with incomplete certified communications, the ledger file records that state. When a new session binds the same reusable name, it reads the ledger file and continues certified communications from the state stored in the file.

Even though a session uses a ledger file, it may sometimes replicate parts of the ledger in process-based storage for efficiency: however, programmers cannot rely on this replication.

If the operating system supports raw storage devices (also called raw partitions), the user can specify such a device as the ledger file.

An optional prefix determines whether writing to the ledger file is a synchronous operation:
■ To specify synchronous writing (the default), either supply an ordinary file name, or prepend the string sync* to the file name; for example, "myLedger" (implicit) or "sync*/local/myLedger" (explicit). Each time a ledger item is written, the call does not return until the data is safely stored in the file system.
■ To specify asynchronous writing, prepend the string nosync* to the file name; for example, "nosync*/local/myLedger". The ledger file might not accurately reflect program state in cases of hardware or operating system kernel failure.

A program that uses an asynchronous ledger file can explicitly synchronize it by
calling rvcm_SyncLedgerFile(), described below.

### Parameters

| **Parameter** | **Description** |
|---|---|
| session | Enable this session for certified delivery tracking. |
| name | Bind this reusable name to the session, so the session represents a persistent correspondent with this name. |
| | If non-Null, the name must conform to the syntax rules for subject names. It cannot begin with reserved tokens. It cannot be a non-reusable name generated by another call to rvcm_Enable(). |
| | If this argument is NULL, then rvcm_Enable() generates a unique, non-reusable name for the duration of the session. |
| reserved | This parameter is reserved for future enhancement. The user must supply NULL for foilNard compatibility. |
| ledgerFile | If this argument is non-NULL, then this session uses a file-based ledger. The argument must represent a valid file name. Actual locations corresponding to relative file names conform to operating system conventions. |
| | Prepending nosync* to the file name specifies asynchronous output to the file system. sync* or no prefix specifies synchronous output (flushed before each output call returns). |
| | If this argument is NULL, then this session uses a process-based ledger. |
| requireOldMsgs | This parameter indicates whether a persistent correspondent requires delivery of messages sent to a previous session with the same name, for which delivery was not confirmed. Its value affects the behavior of other delivery-tracking senders. |
| | If this parameter is RV_TRUE and name is non-NULL, then this session requires certified senders to retain unacknowledged messages sent to this persistent correspondent. When this session begins listening to the appropriate subjects, the senders can complete delivery. (It is an error to supply RV_TRUE when name is NULL.) |
| | If this parameter is RV_FkLSr., then this session does not require certified senders to retain unacknowledged messages. Certified senders may delete those messages from their ledgers. |
| RVCM_OK | No error. The call completed successfully. |
| RVCM_ERR_INVALID_SESSION | The function received a session argument that is not a valid rv_session (for example, NULL, or a session that has already terminated). |
| RVCM_ERR_BAD_SESSION_NAME | The function received an ill-formed reusable name. |
| RVCM_ERR_NO_MEMORY | The function could not complete because the operating system denied its request to allocate storage. |
| RVCM_ERR_FILE_IO_ERROR | rvcm_.Enable ( ) encountered an error while opening the ledger file. For example, an explicitly named directory does not exist. |
| RVCM_ERR_FILE_NO_PERMISSION | File privileges are insufficient for rvcm_Enable ( ) to open the ledger file. |
| RVCM_ERR_LEDGER_NAME_CONFLIC T | rvcm_Enable ( ) received NULL as the name parameter, but a nOn-NULL value as the ledgerFile parameter. |
| RVCM_ERR_PARAMETER_CONFLICT | The function received conflicting values for parameters. |
| | rvcm_Enable ( ) received RV_FALSE as its requireOldMsgs parameter, and NULL as its name parameter. A non-reusable name implies a transient correspondent, which cannot have backlog messages. |
| RVCM_ERR_FILE_NOT_LEDGER_OWNER | The reusable name recorded in the file differs from the name of this session. rvcm_Enable () stopped reading the file. |
| RVCM_ERR_CORRUPT_LEDGER_FILE | The ledger file is corrupt. |
| | rvcm_Enable ( ) could read only part of the ledger file into process-based memory. Some information may be lost. |
| RVCM_ERR_SESSION_ALREADY_ENABLED | rvcm_Enable ( ) received a session that is already enabled for delivery tracking. It is illegal to enable a session more than once. |

### Coding Example

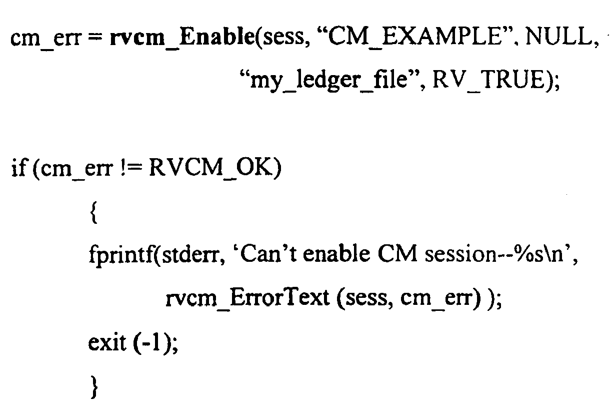

### See Also

rvcm_SyncLedgerfile(), below

### rvcm_ListenSubject()

### Function

### Declaration

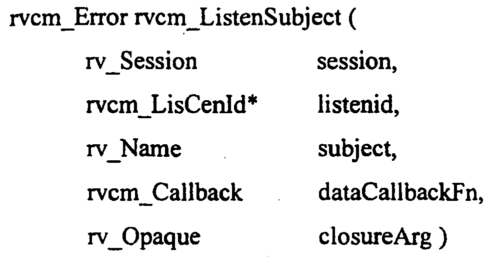

### Purpose

Begin listening for messages that match the subject, and request certified delivery whenever available. Whenever a message arrives, the callback function receives it.

### Remarks

This function is parallel to rv_ListenSubject ( )--it creates an endpoint to receive messages with matching subjects. The endpoint receives both labeled messages and ordinary messages.

When a labeled message arrives from an unfamiliar delivery-tracking session, the receiving session requests certified delivery for the subject. If the sending session accepts the request, then the two sessions cooperate to certify delivery of subsequent messages with this subject.

Unlike ordinary listening endpoints, the user cannot maintain more than one delivery-tracking listening endpoint per subject. When one endpoint is already open, subsequent calls to rvcm_ListenSubject() with the same subject return an error. (This restriction applies to each delivery-tracking session; however, a program with several delivery-tracking sessions can open independent delivery-tracking listeners with identical subjects.)

Unlike rv_ListenSubject(),the user cannot use rvcm_ListenSubject() to listen to wildcard subjects.

The software automatically confirms message delivery when the data callback function returns.

### Parameters

| **Parameter** | **Description** |
|---|---|
| session | A delivery-tracking session. |
| listenId | When rvcrn_ListenSubject() returns (without error), this location contains a handle denoting the new endpoint. To stop listening on the subject, pass this handle to rvcm_Close(). |
| subject | Listen for messages with this subject name. |
| | Wildcard subjects are illegal. |
| dataCallbackFn | When a message arrives, pass it to this callback function. |
| closureArg | Pass this closure argument to the callback function. This argument must be a pointer, but it can point to any type of data. It contains any information needed by the callback function. This argument is treated as an opaque closure forwarding it to the callback function without accessing its value. |
| RVCM_OK | No error. The call completed successfully. |
| RVCM_ERR_INVALID_SESSION | The function received a session argument that is not a valid rv_session (for example, NULL, or a session that has already terminated). |
| RVCM_ERR BAD ARG | The function received an illegal argument. rvcm_ListenSubject() received either a NULL callback function, or a NULL listenid pointer. |
| RVCM_ERR_NO_MEMORY | The function could not complete because the operating system denied its request to allocate storage. |
| RVCM_ERR_BAD_SUBJECT | rvcm_ListenSubject() received an ill-formed subject name. |
| | Either it is NULL, or contained too many total characters, too many characters in an element, too many elements, a wildcard character, or an illegal prefix. |
| RVCM_ERR_DUPLICATE_SUBJECT | rvcm_ListenSubject() Can maintain at most one open listening endpoint per subject (per session); it cannot open a second listening endpoint for this subject. |
| RVCM_ERR_SESSION_NOT_ENABLED | The function received a session that is not enabled for delivery tracking. |

### Coding Example

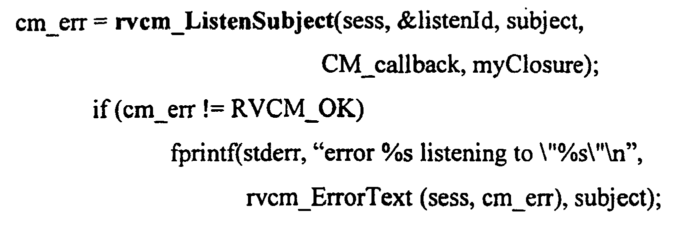

### See Also

rvcm_Callback;
rvcm_ListenId;
rvcm_ListenInbox();
rvcm_Close(), all described below

### rvcm_ListenInbox()

### Function

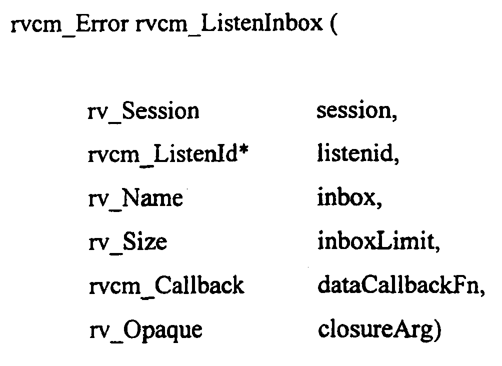

### Purpose

Open an inbox and begin listening for point-to-point messages addressed to it. Request certified delivery whenever available. Whenever a message arrives, pass it to the callback function.

### Remarks

This function is parallel to *rv_ListenInbox ()*--it creates an inbox to receive point-to-point messages. The inbox receives both labeled messages and ordinary messages.

When a labeled message arrives from an unfamiliar delivery-tracking session, the receiving session requests certified delivery for the inbox name. If the sending session accepts the request, then the two sessions cooperate to certify delivery of subsequent messages to this inbox.

Certified delivery to an inbox is limited to the duration of the inbox. Once the users closes an inbox or terminates its session, the inbox and its name become obsolete; the user can never open another inbox with the same name. Since the system can never complete delivery of messages addressed to an obsolete inbox, it automatically deletes stored messages when it detects that an inbox has become obsolete.

The system automatically confirms message delivery when the data callback function returns.

### Parameters

| **Parameter** | **Description** |
|---|---|
| session | A delivery-tracking session. |
| listenId | When rvcm_ListenInbox ( ) returns (without error), this location contains a handle denoting the new inbox. To stop listening, pass this handle to rvcm_Close (). |
| inbox | Location to store the generated name of the new inbox. The allocated space must be at least RV_t,mX_INBOX_NAME (currently 100 bytes). |
| inboxLimit | Number of bytes allocated to store the new inbox name. |
| dataCallbackFn | When a message arrives, pass it to this callback function. |
| closureArg | Pass this closure argument to the callback function. This argument must be a pointer, but it can point to any type of data. It contains any information needed by the callback function. the system treats this argument as an opaque closure, forwarding it to the callback function without accessing its value. |

### Errors

| **RVCM_ERR Code** | **Indicates** |
|---|---|
| RVCM_OK | No error. The call completed successfully |
| RVCM_ERR_INVALID_SESSION | The function received a session argument that is not a valid rv_session (for example, NULL, or a session that has already terminated). |
| RVCM_ERR_BAD_ARG | The function received an illegal argument. rvcm_ListenInbox ( ) received either a NULL inbox name pointer, a NULL callback function, or a NULL listenid pointer. |
| RVCM_ERR_NO_MEMORY | The function could not complete because the operating system denied its request to allocate storage. |
| RVCM_ERR_SESSION_NOT_ENAB LED | The function received a session that is not enabled for delivery tracking. |

### Coding Example

char inboxName [RV_MAX_INBOX_NAME];

cm_err = **rvcm_ListenInbox** (sess, &listenId, inboxName, sizeof(inboxName), CM_callback, myclosure);

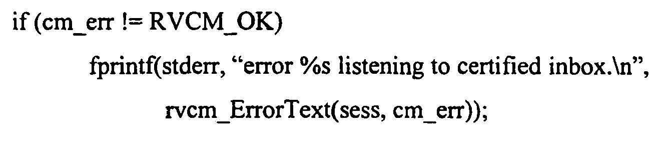

### See Also,

rvcm_Callback, below
rvcm_ListenId, below
rvcm_ListenSubject(), above
rvcm_Close(), below.

### rvcm_Callback

### Datatype

### Declaration

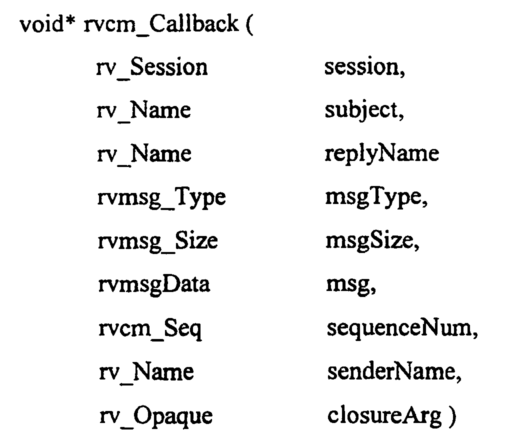

### Purpose

rvcm_Callback is the function type of data callback functions to delivery-tracking listeners. Applications define functions of this type to receive inbound messages and take appropriate actions.

### Remarks

This function type is parallel to rv_Callback. Notice that its function signature includes two additional parameters, senderName and sequenceNum, to receive the tracking data that labels the inbound message. Application programs can use these arguments for testing and auditing.

The system automatically confirms message delivery when the data callback function returns.

The user can write several callback functions to process the various kinds of messages that the application expects to receive. The user can use the same callback function to process messages at several endpoints. Callback functions can take any action in processing a message, except for the following restrictions:
■ Callback functions must not attempt to modify the data (the values of the parameters msg, subject, reillyName and senderName) in any manner. The callback function receives data through pointers; the actual data resides in memory that does not belong to the application. The data pointers remain valid only until the callback function returns.
■ The data callback functions must return promptly.

### Parameters

| **Parameter** | **Description** |
|---|---|
| session | This parameter receives the current session. |
| subject | This parameter receives the destination subject name of the inbound message. |
| | Do not modify this value. |
| | This pointer remains valid only until the callback function returns. |
| replyName | If the inbound message carries a name for replies, this parameter receives it. Otherwise NULL. |
| | Do not modify this value. This pointer remains valid only until the callback function returns. |
| msgType | This parameter receives the datatype of the message. |
| msgSize | This parameter receives the size (in bytes) of the message. |
| msg | This parameter receives a pointer to the message data. |
| | Do not modify this value. This pointer remains valid only until the callback function returns. |
| sequenceNum | If the message is certified, this parameter receives the sequence number that the sender assigned to the message. Otherwise, this parameter receives zero. |
| senderName | If the message is labeled, this parameter receives the name of the delivery-tracking session that sent the message. Otherwise, this parameter receives NULL. |
| | Do not modify this value. This pointer remains valid only until the callback function returns. |
| closureArg | This parameter receives a closure argument supplied by the application when it began listening. This argument is a pointer, but it can point to any type of data. It contains any information needed by the callback function, the system treats this argument as an opaque closure, forwarding it to the callback function without accessing its value. |

### Coding Example

This example code illustrates a data callback function for receiving messages with certified delivery.

### void

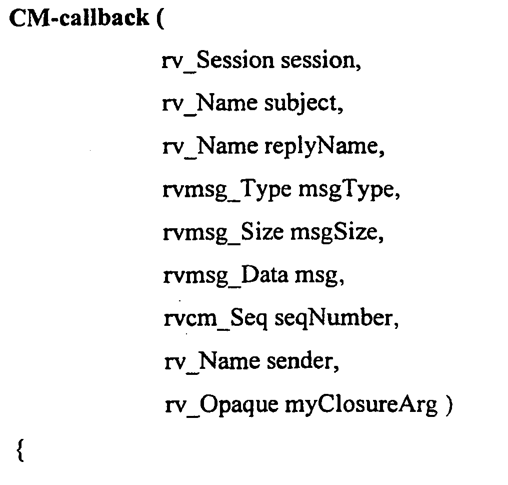

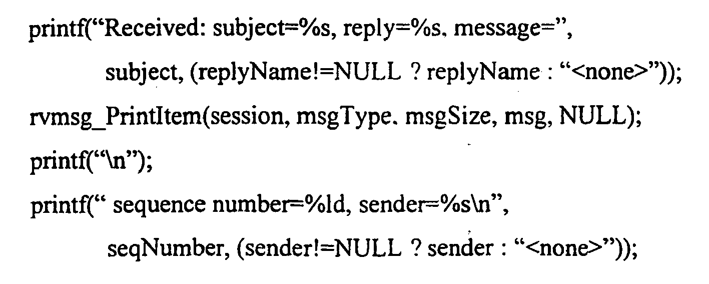

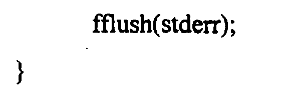

### See Also

rvcm_ListenId; rvcm_Seq; and rvcm_Close(), below.

### rvcm_ListenId

### Datatype

### Declaration

typedef void* rvcm_ListenId;

### Purpose

The rvcm_ListenSubject ( ) arid rvcm_ListenInbox ( ) functions return a handle of type rvcm_ListenId. To stop listening for the corresponding information, pass this handle to rvcm_Close ( ).

### Remarks

an rvcm_Listenld is not meaningful outside of the session in which it was created. Each rvcm_ListenId is a unique handle representing an association between a subject and a callback function. Use rvcm_ListenId only within the local program that receives it from one of the listening functions, and treat it as opaque.

### rvcm_Seq

### Datatype

### Declaration

typedef unsigned long rvcm_Seq;

### Purpose

Sequence number of a labeled message.

### Remarks

Sequence numbers are limited to 32 bits on all platforms (even platforms that support 64-bit integers).

### rvcm_Close()

### Function

### Declaration

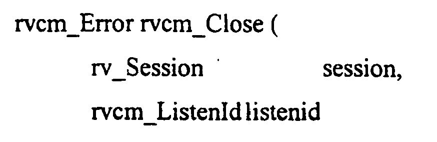

### Purpose

Close a delivery-tracking endpoint; stop listening for messages on it.

### Remarks

This function is parallel to rv_Close ().

Cooperating senders receive a REGISTRATION. CLOSED advisory, indicating that the delivery tracking agreement is no longer in effect. Senders receive a DELIVERY. FAILED advisory for each undelivered message to the closed endpoint, and the system removes undelivered messages from the sender's ledger.

The system deletes the listener's ledger items corresponding to the closed subject.

When rvcm_Close ( ) closes an endpoint, it generates a HOST.LISTEN.STOP advisory message to inform other applications that this application has stopped listening to the subject.

It is important that a persistent listener close a delivery-tracking endpoint when it no longer requires certified delivery of the corresponding subject--and only then. Open endpoints cause certified senders to store messages in the ledger while awaiting delivery confirmation from the sender. From the sender's perspective, a persistent listener that exits without closing its listening endpoints appears the same as a listener that terminates abnormally; the sender continues to store messages awaiting the return of the Listener process. Once an endpoint is closed, senders do not store certified messages for that listener, and successive listener processes with the same correspondent name do not receive certified delivery of messages sent in the interim.

### Coding Example

Close endpoints when the application is finished receiving data. Closing endpoints lets TiB/Rendezvous software re-use the associated storage resources. After closing an endpoint, delete all references to it, to guard against closing it twice.

It is illegal to close the same endpoint more than once. On some platforms, the error RVCM_ERR_NONEXISTENT_ID results; on other platforms, the result can be a fatal error
(because it references dynamically allocated memory that has been freed).

This code fragment illustrates the recommended idiom for closing endpoints:

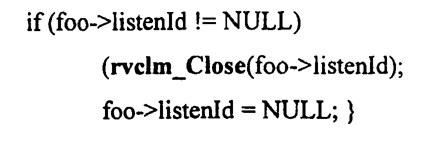

### Parameters

| **Parameter** | **Description** |
|---|---|
| session | The delivery-tracking session that created the endpoint. |
| listenId | Close the endpoint that this handle denotes. |

### Errors

| **RVCM_ERR Code** | **Indicates** |
|---|---|
| RVCM_OK | No error. The call completed successfully. |
| RVCM_ERR_INVALID_SESSION | The function received a session argument that is not a valid rv_Session (for example, NULL. or a session that has already terminated). |
| RVCM_ERR_BAD_ARG | The function received an illegal argument. rvcm_Close() received a NULL listenId pointer. |
| RVCM_ERR_NONEXISTENT_ ID | rvcm_Close () received a NULL listenId pointer either it is NULL, or it points to something other than an rvcm_ListenId, or it points to an endpoint that has already been closed. |
| RVCM_ERR_NO_MEMORY | The function could not complete because the operating system denied its request to allocate storage. |
| RVCM_ERR_SESSION_NOT_ENABLED | The function received a session that is not enabled for delivery tracking. |

### See Also

rvcm_ListenId, above.
**rvcm_Send()**

### Function

### Declaration

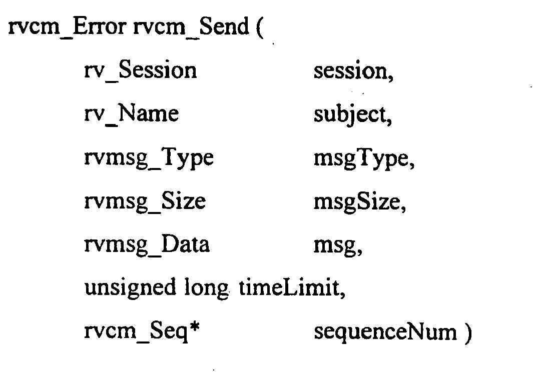

### Purpose

Send a labeled message, and track delivery to cooperating listeners.

### Remarks

This function is parallel to rv_Send (). Notice that its signature includes two additional parameters, timeLimit and SequenceNum.

Use timeLimit to specify the duration of the message (in seconds). The system retains the message in its ledger until either it receives delivery confirmation from all cooperating listeners, or the timeLimit expires. If the time limit expires before delivery is complete, the system removes the message from the ledger, and generates a DELIVERY. FAILED advisory message listing the cooperating listeners that did not confirm delivery of the message.

We recommend a timeLimit value greater than 60 seconds, since the domain holds messages for 60 seconds. rvcm_Send ( ) labels the message with the name of the delivery-tracking session and a sequence number. rvcm_Send ( ) passes the sequence number back to the caller in its sequenceNum parameter (the user can use this number for auditing).

Each sending session maintains a separate sequence for each subject it sends. As a result, receivers can uniquely identify each labeled message by the three data callback arguments subject, senderName and sequenceNum.

When msg has self-evident length, the user may supply zero for msgSize (the system computes the actual size automatically). Types with self-evident size are RVMSG_RVMSG, RVMSG_STRING (when the string is NULL-terminated) and RVMSG_ENCRYPTED. All other types require an explicit size argument in this call.

### rvcm_Send()

rvcm_Send () copies its arguments. After rvcm_S.end ( ) returns, the user may free or reuse the storage (for example, a message buffer).

### Warning

It is illegal to send messages to wildcard subject names. Although rvcm_Send ( ) does not prevent the user from sending illegally to wildcard subjects, the results are unpredictable.

### Parameters

| **Parameter** | **Description** |
|---|---|
| session | A delivery-tracking session. |
| subject | Send the message to this subject name or inbox. |
| msgType | Datatype of the message data. |
| msgSize | Length of the data (in bytes). |
| msg | Location of the data to send. |
| timeLimit | Retain the message in the ledger, and continue attempts at delivery either until completion of delivery or until this time limit (in seconds) expires. |
| | Zero is a special value, indicating no time limit; the message remains in the ledger until delivery is complete to all certified listeners. |
| | A non-zero value less than 60 seconds adds no advantage over ordinary reliable message delivery, since rvd retains and retransmits messages for 60 seconds. |
| sequenceNum | This location receives the sequence number of this message. |

### Errors

| **RVCM_ERR Code** | **Indicates** |
|---|---|
| RVCM_OK | No error. The call completed successfully. |
| RVCM_ERR_INVALID_SESSION | The function received a session argument that is not a valid rv_Session (for example, NULL, or a session that has already terminated). |
| RVCM_ERR_BAD_ARG | The function received an illegal argument. rvcm_Send () or rvcm_SendWithReply () received either a NULL subject. or a NULL sequence number pointer |
| RVCM_ERR_NO_MEMORY | The function could not complete because the operating system denied its request to allocate storage. |
| RVCM_ERR_BAD_SUBJECT | rvcm_Send () or rvcm_SendWithReply () received an ill-formed subject name. |
| | Either it contained too many total characters, too many characters in an element, or too many elements. |
| RVCM_ERR_SESSION_NOT_ENABLED | The function received a session that is not enabled for delivery tracking. |

### Coding Example

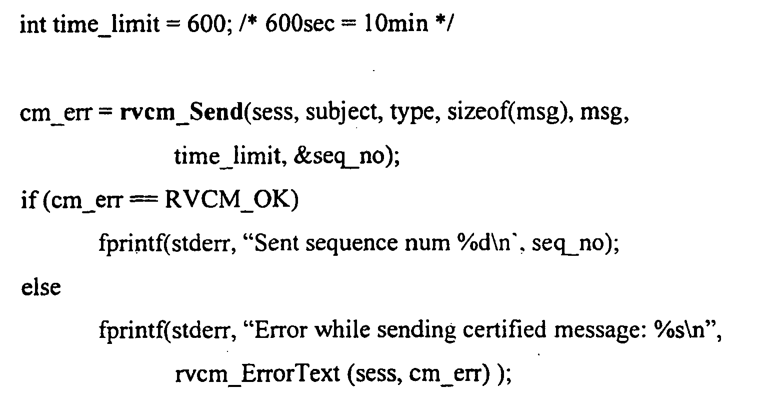

### See Also

rvcm_Seq, above
rvcm_SendWithReply(), below.
**rvcm_SendWithReply**()

### Function

### Declaration

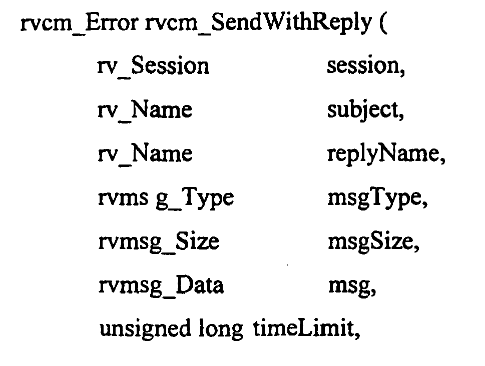

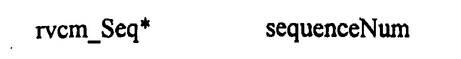

### Purpose

Send a labeled request message, and track delivery to cooperating listeners. A request message includes a reply name as a return address for response messages.

### Remarks

This function is parallel to rv_SendWithReply (). Notice that its signature includes two additional parameters, timeLimit and sequenceNum.

The reply name must be the subject name of an open listening endpoint (either broadcast or inbox). An application may receive zero, one or several responses to a request message. Before the user calls rvcm_SendWithReply () the user must ensure that the appropriate application components are listening to the reply name.

rvcm_SendWithReply ( ) is a non-blocking function. It returns immediately, and the callback function receives any replies asynchronously. A reply is not guaranteed (for example, if the receiver does not send any reply).

Use timeLimit to specify the duration of the message, the system retains the message in its ledger until either it receives delivery confirmation from all cooperating listeners, or the timeLimit expires. If the time limit expires before delivery is complete, the system removes the message from the ledger, and generates a DELIVERY.FAILED advisory message listing the cooperating listeners that did not confirm delivery of the message.

A timeLimit value greater than 60 seconds is recommended, since the domain holds messages for 60 seconds.

### rvcrn_Send WithReply()

rvcm_SendWithReply() labels the message with the name of the delivery-tracking session and a sequence number. rvcm_SendWithRepIyQ passes the sequence number back to the caller in its sequenceNum parameter (the user can use this number for auditing).

Each sending session maintains a separate sequence for each subject it sends. As a result, receivers can uniquely identify each labeled message by the three data callback arguments subject, senderName and sequenceNum.

When msg has self-evident length, the user may supply zero for msgSize (the system computes the actual size automatically). Types with self-evident size are RVMSG_RVMSG, RVMSG_STRING (when the string is NULL-terminated) and RVMSG_ENNCRYPTED. All other types require an explicit size argument in this call.

rvcm_SendWithReply() copies its arguments. After rvcm_SendWithReply() returns, the user may free or reuse the storage (for example, a message buffer).

### Warning

It is illegal to send messages to wildcard subject names. Although the function rvcm_SendWithReply() does not prevent the user from sending illegally to wildcard subjects, the results are unpredictable.

### Parameters

| **Parameter** | **Description** |
|---|---|
| Session | A delivery-tracking session. |
| Subject | Send the message to this subject name or inbox. |
| ReplyName | Subject name for replies to this request message (similar to a return address on a letter, and delivered to receiving applications in the replyName argument of the callback function). |
| | The reply name may be an inbox or subject name. Before calling rvcm_SendWithReply(), ensure that a listening endpoint is already open for the reply name. |
| MsgType | Datatype of the message data. |
| MsgSize | Length of the data (in bytes). |
| Msg | Location of the data to send. |
| timeLimit | Retain the message in the ledger, and continue attempts at delivery either until completion of delivery or until this time limit (in seconds) expires. |
| | Zero is a special value, indicating no time limit: the message remains in the ledger until delivery is complete to all certified listeners. |
| | A non-zero value less than 60 seconds adds no advantage over ordinary reliable message delivery, since rvd retains and retransmits messages for 60 seconds. |
| sequenceNum | This location receives the sequence number of this message. |

### Errors

| **RVCM_ERR Code** | **Indicates** |
|---|---|
| RVCM_OK | No error. The call completed successfully. |
| RVCM_ERR_INVALID_SESSION | The function received a session argument that is not a valid rv_Session (for example, NULL, or a session that has already terminated). |
| RVCM_ERR_BAD_ARG | The function received an illegal argument. rvcm_Send() or rvcm_SendWithReply() received either a NULL subject, or a NULL sequence number pointer. |
| RVCM_ERR_NO_MEMORY | The function could not complete because the operating system denied its request to allocate storage. |
| RVCM_ERR_BAD_SUBJECT | rvcm_Send() or rvcm_SendWithReply() received an ill-formed subject name. racters in an element, or too many elements. |
| | Either it contained too many total characters, too many cha |
| RVCM_ERR_SESSION_NOT_ENABLED | The function received a session that is not enabled for delivery tracking. |

### Coding Example

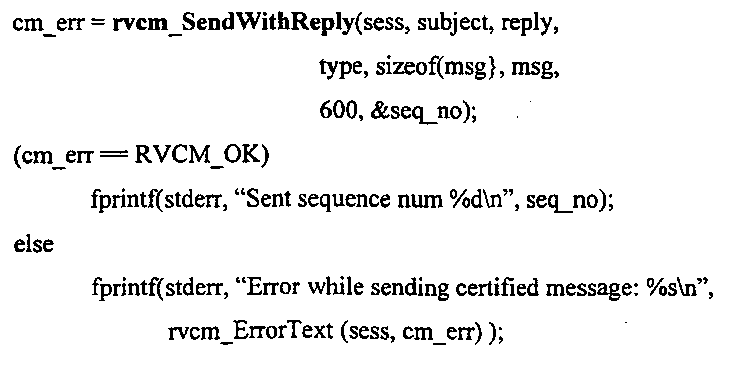

### See Also

rvcm_Seq, page 203; and
rvcm_SendWithReply(), above.
**rvcm_Add Listener()**

### Function

### Declaration

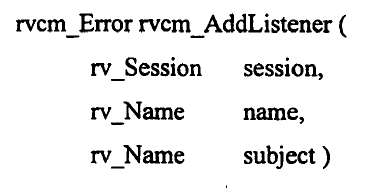

### Purpose

Pre-register an anticipated listener.

### Remarks

Some sending applications can anticipate requests for certified delivery--even before the listening applications begin running. In such situations, the sender can pre-register listeners, so the system begins storing outbound messages in the sender's ledger; when the listener requests certified delivery, it receives the backlogged messages.

If the correspondent with this name already receives certified delivery of this subject from this sender session, then rvcm_AddListener() has no effect.

If the correspondent with this name is disallowed, then rvcm_AddListener() returns an error. The usercan call rvcm_AllowListener() to supersede the effect of a prior call to rvcm_DisallowListener(); then call rvcm_AddListener() again.

### Parameters

| **Parameter** | **Description** |
|---|---|
| session | A delivery-tracking session. |
| subject | Anticipate a listener for this subject. |
| name | Anticipate a listener from a correspondent with this reusable name. |

*rvcm_AddListener* ()

### Errors

| **RVCM_ERR Code** | **Indicates** |
|---|---|
| RVCM_OK | No error. The call completed successfully. |
| RVCM_ERR_INVALID_SESSION | The function received a sess ion argument that is not a valid rv_session (for example, NULL, or a session that has already terminated). |
| RVCM_ERR_BAD_SESSION_NAME | The function received an ill-formed reusable name. |
| RVMC_ERR_BAD_ARG | The function received an illegal argument. |
| | rvcm_AddListener() received a NULL listener name. |
| RVCM_ERR_SESSION_NOT_ENABLED | The function received a session that is not enabled for delivery tracking. |
| RVCM_ERR_BAD_SUBJECT | The function received an ill-formed subject name. |
| | Either it is NULL, or contained too many total characters, too many characters in an element, too many elements, or an illegal prefix. |
| RVCM_ERR_DISALLOWED_LISTENER | rvcm_AddListener() cannot add this listener because it is disallowed. First call rvcm_AllowListener(). |

### Coding Example

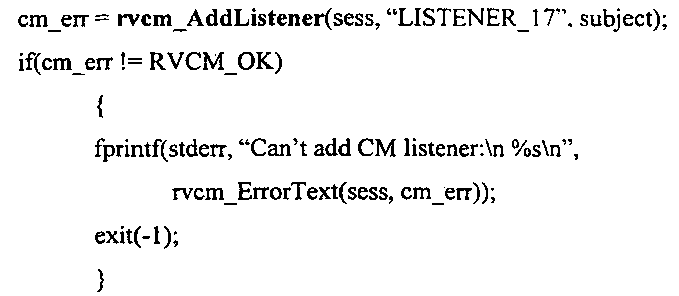

### See Also

rvcm_RemoveListener(), below.

### rvcm_RemoveListener()

### Function

### Declaration

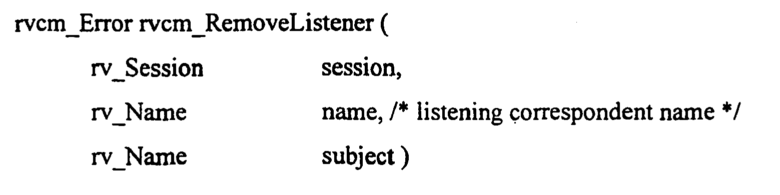

### Purpose

Unregister a specific listener at a specific correspondent, and free associated storage in the sender's ledger.

### Remarks

This function cancels certified delivery of the specific subject to the correspondent with this name. The listening correspondent may subsequently re-register for certified delivery of the subject. (In contrast, rvcm_DisallowListener() cancels certified delivery of *all* subjects to the correspondent, *and* prohibits re-registration.)

Senders usually call this function when the ledger item for a listening correspondent has grown very large. Such growth indicates that the listener is not confirming delivery, and may have terminated. Removing the listener reduces the ledger size by deleting messages stored for the listener.

When a sending program calls this function, certified delivery software in the sender behaves as if the listener had closed the endpoint for the subject. The sending program deletes from its ledger all information about delivery of the subject to the correspondent with this name. The sending program receives a REGISTRATION. CLOSED advisory, to trigger any operations in the callback function for the advisory.

If the listening correspondent is available (running and reachable), it receives a REGISTRATION.NOT_CERTIFIED advisory, informing it that the sender no longer certifies delivery of the subject.

If the correspondent with this name does not receive certified delivery of the subject from this sender session, then rvcm_RemoveListener() returns RVCM_ERR_BAD_SUBJECT.

### Parameters

| **Parameter** | **Description** |
|---|---|
| session | A delivery-tracking session. |
| subject | Cancel certified delivery of this subject. |
| name | Cancel certified delivery of the subject to the correspondent with this name. |

### Errors

| **RVCM_ERR Code** | **Indicates** |
|---|---|
| RVCM_OK | No error. The call completed successfully. |
| RVCM_ERR_INVALID_SESSION | The function received a session argument that is not a valid rv_Session (for example, NULL Or a session that has already terminated). |
| RVCM_ERR_BAD_ARG | The function received an illegal argument. |
| | rvcm_RemoveListener() received a NULL listener name or NULL subject; or the sender does not certify delivery of the subject to the listener. |
| RVCM_ERR_SESSION_NOT_ENABLED | The function received a session that is not enabled for delivery tracking. |
| RVCM_ERR_BAD_SUBJECT | The function received an ill-formed subject name. |
| | Either it is NULL, or contained too many total characters, too many characters in an element, too many elements, or an illegal prefix. |
| | rvcm_RemoveListener() received a subject containing wildcard characters; or the sender has not sent certified messages on this subject. |
| RVCM_ERR_DISALLOWED_LISTENER | rvcm_RemoveListener() cannot cancel certified delivery to this listener because the listener is disallowed. |

### Coding Example

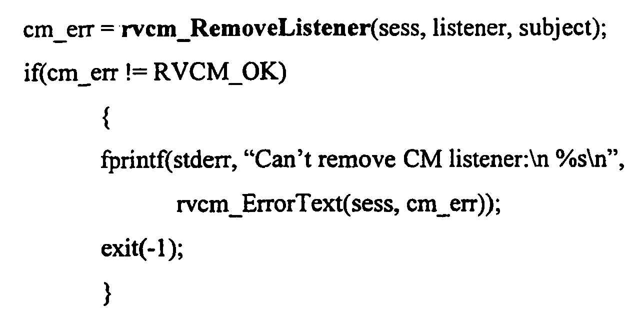

### See Also

rvcm_AddListener(), above; and
rvcm_DisaliowListener(), below.

### rvcm_DisallowListener()

### Function

### Declaration

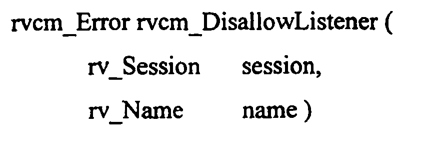

### Purpose

Cancel certified delivery to all listeners at a specific correspondent. Deny subsequent certified delivery registration requests from those listeners.

### Remarks

Disallowed listeners still receive subsequent messages from this sender, but delivery is not certified. That is:
■ The listener receives a REGISTRATION.NOT-CERTIFIED advisory, informing it that the sender has cancelled certified delivery of all subjects.
■ If the sender's ledger contains messages sent to the disallowed listener (for which this listener has not confirmed delivery), then the system removes those ledger items, and does not attempt to redeliver those messages.
■ The system presents subsequent messages (from the cancelling sender) to the listener with sequence number zero, to indicate that delivery is not certified.

Senders can promptly revoke the acceptance of certified delivery by calling rvcm_DisaIlowListener() within the callback function that processes the REGISTRATION.REQUEST advisory.

This function disallows a correspondent by name. If the correspondent terminates, and another process instance (with the same reusable name) takes its place, the new process is still disallowed by this sender.

To supersede the effect of rvcm_DisallowListener(), call rvcm_AllowListener().

### Parameters

| **Parameter** | **Description** |
|---|---|
| session | A delivery-tracking session |
| name | Cancel certified delivery to listeners at the session with this name. |

### Errors

| **RVCM_ERR Code** | **Indicates** |
|---|---|
| RVCM_OK | No error. The call completed successfully. |
| RVCM_ERR_INVALID_SESSION | The function received a session argument that is not a valid rv_Session (for example, NULL< or a session that has already terminated). |
| RVCM_ERR_BAD_SESSION_NAME | The function received an ill-formed reusable name. |
| RVCM_ERR_BAD_ARG | The function received an illegal argument. |
| | rvcm_DisallowListener() received a NULL listener name. |
| RVCM_ERR_SESSION_NOT_ENABLED | The function received a session that is not enabled for delivery tracking. |

### Coding Example

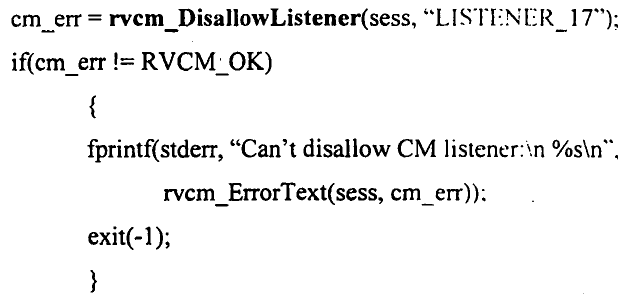

**rvcm_AllowListener()**

### Function

### Declaration

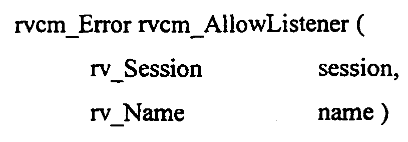

### Purpose

Invite the named receiver to reinstate certified delivery for its listeners, superseding the effect of any previous calls to rvcm_DisallowListener().

### Remarks

Upon receiving the invitation to reinstate certified delivery, the system at the listening program automatically sends new registration requests. The sending program accepts these requests, restoring certified delivery.

### Parameters

| **Parameter** | **Description** |
|---|---|
| session | A delivery-tracking session. |
| name | Accept requests for certified delivery to listeners at the session with this name. |

### Errors

| **RVCM_ERR Code** | **Indicates** |
|---|---|
| RVCM_OK | No error. The call completed successfully. |
| RVCM_ERR_INVALID_SESSION | The function received a session argument that is not a valid rv_Session (for example, NULL, or a session that has already terminated). |
| RVCM_ERR_BAD_SESSION_NAME | The function received an ill-formed reusable name. |
| RVCM_ERR_BAD_ARG | The function received an illegal argument. rvcm_AllowListener() received a NULL listener name. |
| RVCM_ERR_SESSION_NOT_ENABLED | The function received a session that is not enabled for delivery tracking. |

### Coding Example

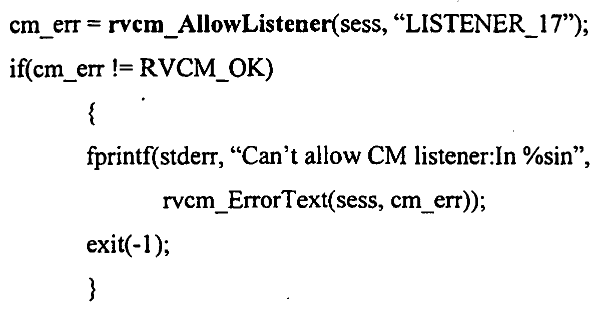

**rvcm_NoAutoConfirm()**

### Function

### Declaration

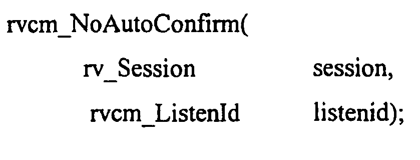

### Purpose

Override automatic confirmation of delivery for this listening endpoint.

### Remarks

The default behavior of certified listeners is to automatically confirm message delivery upon return from the data callback function (see rvcm_Callback, above). This call selectively overrides this behavior for this specific listening endpoint. (This call does not affect other listening endpoints.)

By overriding automatic confirmation, the listener assumes responsibility for explicitly confirming each inbound certified message by calling rvcm_Confirm().

Consider overriding automatic confirmation when processing inbound messages involves asynchronous activity, such as computations in other threads, database queries, or additional network communications.

No method exists to restore the default behavior, reversing the effect of this function. Parameters

### Parameter

| **Parameter** | **Description** |
|---|---|
| session | A delivery-tracking session. |
| listenId | Override automatic confirmation for inbound certified messages to this listening endpoint. |

### Errors

| **RVCM_ERR Code** | **Indicates** |
|---|---|
| RVCM_OK | No error. The call completed successfully. |
| RVCM_ERR_INVALID_SESSION | The function received a session argument that is not a valid rv_Session (for example, NULL, or a session that has already terminated). |
| RVCM_ERR_NONEXISTENT_ID | rvcm_NoAutoConfirm() received an unusable listenId pointer-either NULL, or it points to something other than an rvcm ListenId, or it has already been closed. |

### See Also

rvcm_Callback above, and
rvcm_Confirm(), below.

### rvcm_Confirm()

### Function

### Declaration

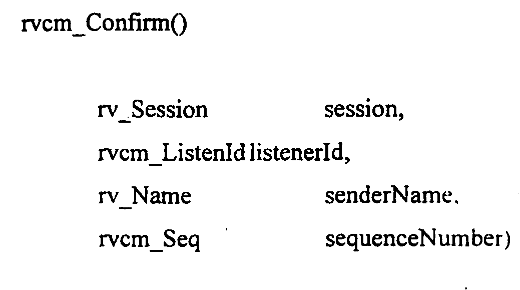

### Purpose

Confirm delivery of a certified message.

### Remarks

Use this function only in programs that override automatic confirmation.

The triplet of subject name, sender and sequence number uniquely identifies each certified message. The subject name is already stored in the listening endpoint. The other two components---sender and sequence number--are explicit parameters of this function.

### Parameters

| **Parameter** | **Description** |
|---|---|
| session | A delivery-tracking session. |
| listenId | Confirm delivery of a message by this listening endpoint. |
| senderName | Confirm delivery of a message from the sender with this correspondent name. |
| sequenceNumber | Confirm delivery of the message with this sequence number. |

### Errors

| **RVCM_ERR Code** | **Indicates** |
|---|---|
| RVCM_OK | No error. The call completed successfully. |
| RVCM_ERR_INVALID_SESSION | The function received a session argument that is not a valid rv_Session (for example, NULL. or a session that has already terminated). |
| RVCM_ERR_BAD_ARG | The function received an illegal argument. |
| | rvcm_Confirm( ) received a sequence number argument that is out of range. |
| RVCM_ERR_ID_CONFIRM_CONFLICT | rvcm_Confirm() received a listenId that automatically confirms delivery. rvcm_Confirm() is only valid after overriding automatic confirmation with rvcm_NoAutoCon firm(). |
| RVCM_ERR_NONEXISTENT_ID | rvcm_Confirm() received an unusable listenId pointer-either NULL, or it points to something other than an rvcm_ListenId, or it has already been closed. |
| RVCM_ERR_NONEXISTENT_PUBLISHER | rvcm_confirm() received a senderName argument that is not recognized as the name of a certified sender. |

### See Also

rvcm_Callback; and rvcm_NoAutoConfirm(), above.
**rvcm_ReviewLedger()**

### Function

### Declaration

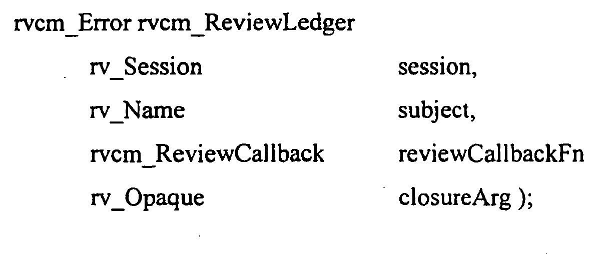

### Purpose

Summarize the delivery status of messages in the ledger,

### Remarks

The callback function receives one message for each matching subject stored in the ledger. For example, when rvcm_ReviewLedger() receives FOO. * as its subject argument, it calls the callback function separately for these matching subjects--once for FOO.BAR, once for FOO.BAZ, and once for FOO.BOX.

However, if the callback function returns non-NULL, then rvcm_ReviewLedger() returns immediately.

If the ledger does not contain any matching items, rvcm_ReviewLedger() returns normally without calling the callback function.

For information about the content and format of the callback messages, see rvcm_ReviewCallback, below.

### Parameters

| **Parameter** | **Description** |
|---|---|
| session | A delivery-tracking session. |
| subject | Review ledger items with this subject. |
| | If this subject contains wildcard characters ("*" or ">"), then review all items with matching subject names. The callback function receives a separate message for each matching subject in the ledger. |
| reviewCallbackFn | This function receives the review messages. |
| closureArg | Pass this closure argument to the callback function. This argument must be a pointer, but it can point to any type of data. It contains any information needed by the callback function. the system treats this argument as an opaque closure, forwarding it to the callback function without accessing its value. |

### Errors

| **RVCM_ERR Code** | **Indicates** |
|---|---|
| RVCM_OK | No error. The call completed successfully. |
| RVCM_ERR_INVALID_SESSION | The function received a session argument that is not a valid rv_Session (for example, NULL, or a session that has already terminated). |
| RVCM_ERR_BAD_ARG | The function received an illegal argument. rvcm_ReviewLedger() received a NULL subject name or a NULL review callback function. |
| RVCM_ERR_NO_MEMORY | The function could not complete because the operating system denied its request to allocate storage. |
| RVCM_ERR_SESSION_NOT_ENABLED | The function received a session that is not enabled for delivery tracking. |

### Coding Example

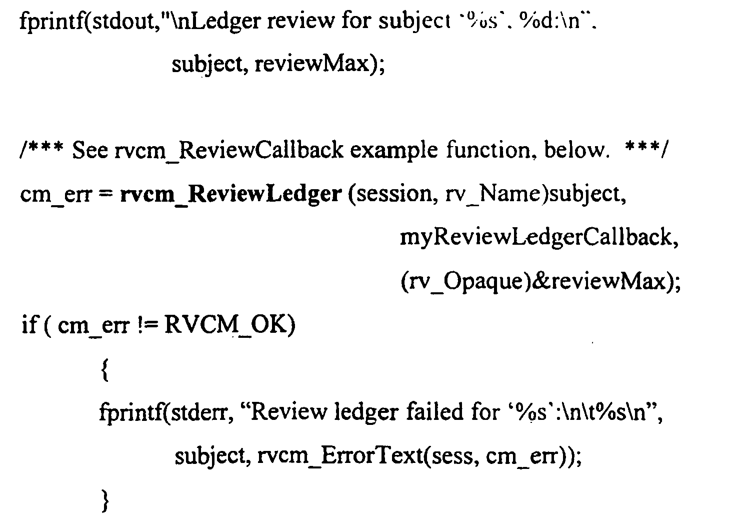

### See Also

### rvcm_ReviewCallback, above.

### rvcm_ReviewCallback

### Datatype

### Declaration

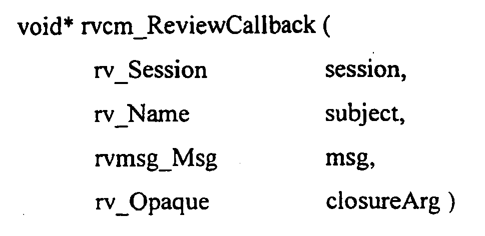

### Purpose

rvcrn_ReviewCallback is the function type of callback functions for reviewing the ledger. Applications define functions of this type to process the summary messages from rvcm_ReviewLedger().

### Remarks

rvcm_ReviewLedger() calls this callback once for each matching subject in the ledger.

To continue reviewing the ledger, return NULL from this callback function. To stop reviewing the ledger, return non-NULL from this callback function; rvcm_ReviewLedger() returns immediately.

### Parameters

| **Parameter** | **Description** |
|---|---|
| session | This parameter receives the current session. |
| subject | This parameter receives the subject name that the message summarizes. |
| msg | This parameter receives a summary message describing the delivery status of messages in the ledger. The table below describes the fields of the summary message. |
| closureArg | This parameter receives a closure argument, which the application supplied when it called rvcm_ReviewLedger(). This argument is a pointer, but it can point to any type of data. It contains any information needed by the callback function. The system treats this argument as an opaque closure, forwarding it to the callback function without accessing its value. |

### Message Content

| **Field Name** | **Description** |
|---|---|
| subject | The subject that this message summarizes. This field has datatype RVMSG_STRING. |
| seqno_last_sent | The sequence number of the most recent message sent with this subject name. |
| | This field has datatype RVMSG_UTNT. |
| total_msgs | The total number of messages with this subject name. This field has datatype RVMSG_UINT. |
| total_size | The total storage (in bytes) occupied by all messages with this subject name. |
| | If the ledger contains ten messages with this subject name, then this field sums the storage space over all of them. |
| | This field has datatype RVMSG_UINT. |
| listener | Each summary message can contain one or more fields named listener. |
| | Each listener field contains a nested submessage with details about a single registered listener. |
| | This field has datatype RVMSG_RVMSG. |
| listener.**name** | Within each listener submessage, the name field contains the name of the delivery-tracking listener: |
| | This field has datatype RVMSG_STRING. |
| listener.**last_confirmed** | Within each listener submessage, the last_confirmed field contains the sequence number of the last message for which this listener confirmed delivery. |
| | This field has datatype RVMSG_UINT. |

### Coding Example

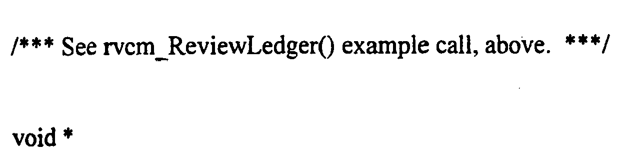

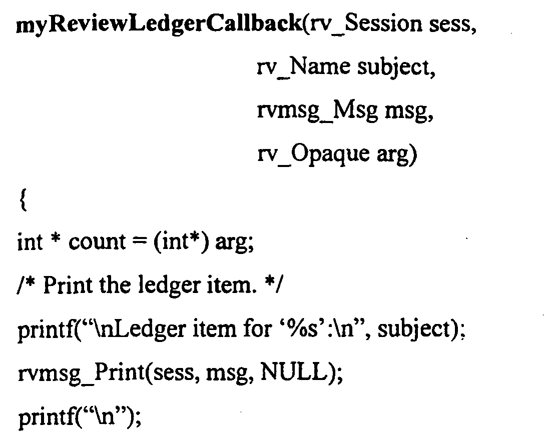

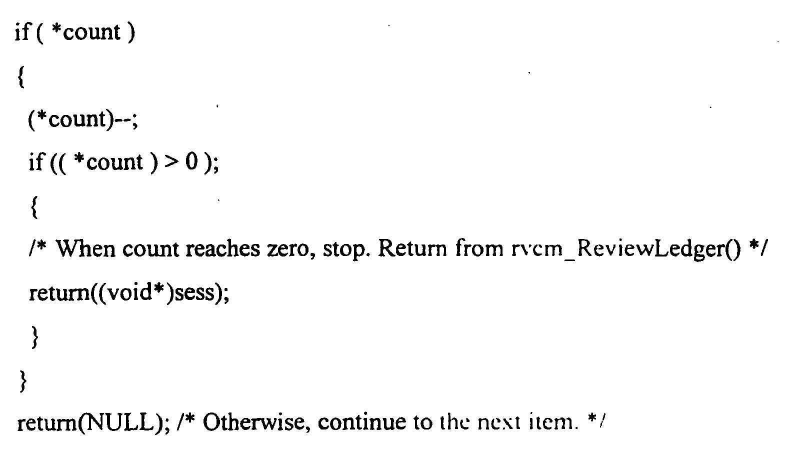

### See Also

### rvcm_ReviewCallback

rvcm_ReviewLedger(), above.

### rvcm_SyncLedgerFile()

### Function

### Declaration

rvcm_Error rvcm-SyncLedgerFile (rv_Session session);

### Purpose

Synchronize the ledger file to its storage medium.

### Remarks

When this function returns, the session's current state is safely stored in the ledger file.

Delivery-tracking sessions that use synchronous ledger files need not call this function, since the current state is automatically written to the file system before returning.

### Parameters

| **Parameter** | **Description** |
|---|---|
| session | Synchronize the ledger file associated with this delivery-tracking session. |

### Errors

| **RVCM Error Code** | **Indicates** |
|---|---|
| RVCM_OK | No error. The call completed successfully. |
| RVCM_ERR_INVALID_SESSION | The function received a session argument that is not a valid rv_Session (for example, NULL, or a session that has already terminated). |
| RVCM_ERR_SESSION_NOT_ENABLED | The function received a session that is not enabled for delivery tracking. |
| RVCM_ERR_FILE_IO_ERROR | rvcm_SyncLedgerFile() encountered an error while writing the ledger file. |

### See Also

rvcm_Enable(), above.

### rvcm_Error

### Datatype

rvcm_Error iS art enumerated type for error codes. Table A2 lists the possible rvcm_Error values. The user can use the function rvcm_ErrorText() to convert rvcm_Error message codes to descriptive text. For more information, see rvcm_ErrorText() on page 244.

**Table A2: Enumerated Values of rvcm_Error**

| **RVCM Error Code** | **Indicates** |
|---|---|
| RVCM_OK | No error. The call completed successfully. |
| RVCM_ERR_INIT_FAILURE | rvcm_EnableQueue() could not initialize either the certified delivery or fault tolerance components upon which it depends. |
| RVCM_ERR_INVALID_SESSION | The function received a session argument that is not a valid rv_Session (for example, NULL, or a session that has already terminated). |
| RVCM_ERR_BAD_SESSION_NAME | The function received an ill-formed reusable name. |
| | rvcm_ListenSubject() received either a NULL callback function, or a NULL listenid pointer. |
| | rvcm_Listen!nbox() received either a NULL inbox name pointer, a NULL callback function, or a NULL listenid pointer. |
| | rvcm_DisattowListener() received a NULL listener name. |
| | rvcm_AllowListener() received a NULL Listener name. |
| | rvcm_AdclListener() received a NULL listener name. |
| | rvcm_RemoveListener() received a NULL listener name or NULL subject; or the sender does not certify delivery of the subject to the listener. |
| | rvcm_Send() or rvcm_SendWithReply() received either a NULL subject, or a NULL sequence number pointer. |
| | rvcm_ReviewLedger() received a NULL subject name or a NULL review callback function. |
| | rvcm_Confirm() received a sequence number argument that is out of range. |
| RVCM_ERR_NO_MEMORY | The function could not complete because the operating system denied its request to allocate storage. |
| RVCM_ERR_BAD_SUBJECT | rvcm_Send(). rvcm_SendWithReply() or rvcm_ListenSubject() received an ill-formed subject name. |
| | Either it is NULL, or contained too many total characters, too many characters in an element, too many elements a wildcard character, or an illegal prefix. |
| | rvcm_RemoveListener() received a subject containing wildcard characters: or the sender has not sent certified messages on this subject. |
| RVCM_ERR_ID_CONFIRM_CONFLICT | rvcm_Confirm() received a listenid that automatically confirms delivery. |
| | rvcm_confirm() is only valid after overriding automatic confirmation with rvcm_NoAutoConfirm ( ). |
| RVCM_ERR_NONEXISTENT_ID | rvcm_Close(), rvcm-NoAutoConfirm (), or rvcm_Confirm() received an unusable listenid pointer--either NULL, or it points to something other than an rvcm_ListenId, or it has already been closed. |
| RVCM_ERR_DUPLICATE_SUBJECT | rvcm_ListenSubject() can open at most one listening endpoint per subject; it cannot open a second listening endpoint for this subject. |
| RVCM_ERR_NONEXISTENT_PUBLISHER | rvcm_Confirm() received a senderName argument that is not recognized as the name of a certified sender. |
| RVCM_ERR_DISALLOWED_LISTENER | rvcm_AddListener() cannot add this listener because it is disallowed. First call rvcm_AllowListener(). |
| | rvcm_RemoveListener() cannot cancel certified delivery to this listener because the listener is disallowed. |
| RVCM_ERR_SESSION_ALREAD Y_ENABLED | rvcm_Enable() received a session that is already enabled for delivery tracking. It is illegal to enable a session more than once. |
| RVCM_ERR_SESSION_NOT_ENABLED | The function received a session that is not enabled for delivery tracking. |
| RVCM_ERR_LEDGER_NAME_CONFLICT | rvcm_Enable() received NULL as the name parameter, but a non-NULL value as the ledgerFile parameter. |
| RVCM_ERR_PARAMETER_CONFLICT | The function received conflicting values for parameters. |
| | rvcm_Enable() received RV_FALSE as its requireOldMsgs parameter, and NULL as its name parameter. A non-reusable name implies a transient correspondent, which cannot have backlog messages. |
| RVCM_ERR_FILE_IO_ERROR | rvcm_Enable() encountered an error while opening the ledger file. For example, an explicitly named directory does not exist. |
| | rvcm_SyncLedgerFile() encountered an error while writing the ledger file. |
| RVCM_ERR_FILE_NO_PERMISSION | File access privileges are insufficient for rvcm_Enable ( ) to open the ledger file. |
| RVCM_ERR_FILE_NOT_LEDGE R_OWNER | The reusable name recorded in the file differs from the name of this session. ryere_Enable ( ) stopped reading the file. |
| RVCM_ERR_CORRUPT_LEDGE R_FILE | The ledger file is corrupt. |
| | rvcm_Enable() could read only part of the ledger file into process-based memory. Some information may be lost. |

### See Also

rvcm_ErrorTextO, below.

### APPENDIX B: Distributed Queues (Programming Details for C Programmers)

This Appendix A provides programming details for C programmers wishing to implement Certified message Delivery. The Appendix provides, in Table A1, an overview listing of Certified's messaging Deliver Datatypes and Functions. Each Datatype or Function is then described in greater detail with Cross-references to related Datatypes or Functions.

As described above, Applications can use distributed queues for certified delivery to *one of n* listeners (queue member sessions). These distributed queue functions are typically used in combination with certified message delivery.

### Distributed Queue CAPI

The following Table BA summarizes the datatypes and functions in the distributed queue C API.

**Table B1: Distributed Queues: Dataty yes and Functions**

| **Item** | **Description** | **Page** |
|---|---|---|
| rvcm_EnableQueue() | Enable a session as a distributed queue member | 248 |
| rvcm_rvcm_SetQueueAcceptTime () | Set the queue time limit for task acceptance. | 251 |
| rvcm_QueueAcceptTime() | Return the queue time limit for task acceptance. | 253 |
| rvcm_SetQueueCompleteTime() | Set the queue time limit for task completion. | 255 |
| rvcm_QueueCompleteTime() | Return the queue time limit for task completion. | 257 |
| rvcm_SetQueueListenerWeight() | Set the listener weight of a queue member. | 261 |
| rvcm_QueueListenerWeight() | Return the listener weight of a queue member. | 261 |
| rvcm_SetQueueListenerTasks() | Set the listener task capacity of a queue member. | 263 |
| rvcm_QueueListenerTasks() | Return the listener task capacity of a queue member. | 266 |
| rvcm_Error | Datatype. Enumerates error codes for the certified message delivery API and distributed queue API. | 239 |
| rvcm_ErrorTest() | Return a text string describing an error code | 244 |

**rvcm_EnableQueue()**

### Function

### Declaration

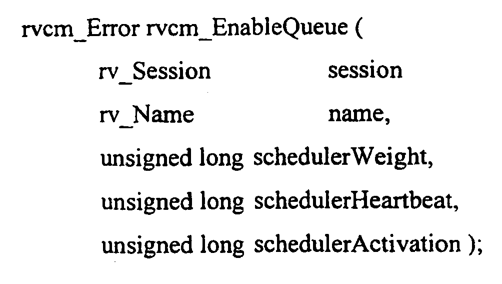

### Purpose

Enable a session for certified message delivery as part of distributed queue for one-of-n certified delivery.

### Remarks

Each member of a distributed queue listens for the same subjects--yet even when n members listen, for each inbound message (or task), exactly one member processes the message.

Programs must call rvcm_EnableQueue() before any other calls related to distributed queues or certified listening.

Once a session becomes a queue member, it cannot resign membership except with rv_Term().

### Queue Member Roles

Each distributed queue member session has two distinct roles--as a listener and as a potential scheduler.

In the listener role, queue member sessions support a limited subset of certified delivery calls: rvcm_ListenSubject(), rvcm_NoAutoConfirm() and rvcm_Confirm(). Queue member sessions do not support any other certified delivery calls (in particular, calls associated with sending certified messages). However, they do support all standard system calls (for example, rv_Send()).

System fault tolerance software maintains exactly one active scheduler in each queue: if the scheduler process terminates, another member assumes the role of scheduler. The queue member session in the **scheduler role** assigns inbound tasks to listeners in the queue. (A scheduler can assign tasks to its own listener component, but only does so when all other listeners are busy.)

### Parameters

| | |
|---|---|
| **Parameter** | **Description** |
| session name | The call enables this session. |
| | Before this call, the session must not yet be enabled for delivery tracking. |
| | The session becomes part of the distributed queue with this reusable name. |
| schedulerWeight | Weight represents the ability of this session to fulfill the role of scheduler, relative to other members of the same queue. The queue members use relative scheduler weight values to elect one member as the scheduler; members with higher scheduler weight take precedence. |
| | Acceptable values range from I to 65535 (even though the parameter is declared as an unsigned long). |
| schedulerHeartbeat | The scheduler session sends heartbeat messages at this interval (in milliseconds). |
| | All sessions in the queue must specify the same value for this parameter. Acceptable values are the unsigned 32-bit integers (except zero). |
| schedulerActivation | When the heartbeat signal from the scheduler has been silent for this interval (in milliseconds), the queue member with the greatest scheduler weight takes its place as the new scheduler. |
| | All sessions in the queue must specify the same value for this parameter. Acceptable values are unsigned 32-bit integers (except zero). |

### Errors

| **RVCM_ERR Code** | **Indicates** |
|---|---|
| RVCM_OK | No error. The call completed successfully. |
| RVCM_ERR_INVALID_SESSION | The function received a session argument that is not a valid rv_session (for example, NULL, or a session that has already terminated). |
| RVCM_ERR_SESSION_ALREAD Y_ENABLED | rvcm_Enable() received a session that is already enabled for delivery tracking. It is illegal to enable a session more than once. |
| RVCM_ERR_NO_MEMORY | The function could not complete because the operating system denied its request to allocate storage. |
| RVCM_ERR_INIT_FAILURE | rvcm_EnableQueue() could not initialize either the certified delivery or fault tolerance components upon which it depends. |

### See Also

rvcm_Enable(), Appendix A
rvcm_ListenSubject(), Appendix A
*******
**rvcm_SetQueueAcceptTime()**

### Function

### Declaration

#define DEFAULT_ACCEPT_TIME (0)

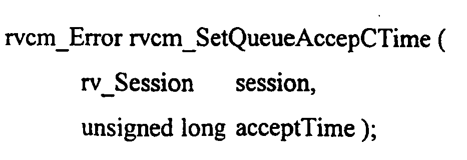

### Purpose

Change the accept time parameter of a queue member session.

### Remarks

When this session, acting as the scheduler, assigns a task to a listener (another queue member session), it sets a timer with this length (in milliseconds). If the timer elapses before the scheduler receives acceptance from the listener, the scheduler reassigns the task to another listener.

Zero is a special value, which specifies no limit on the acceptance time---that is, the scheduler does not set a timer, and does not reassign tasks.

Enabling a session as a queue member tacitly sets its accept time parameter to DEFAULT_ACCEPT_TIME (zero).

### Parameters

| **Parameter** | **Description** |
|---|---|
| session | A session in a distributed queue |
| acceptTime | This value (in milliseconds) becomes the new time limit for acceptance of tasks. It must be less than the complete time parameter (unless the complete time is zero). |

### Errors

| | |
|---|---|
| RVCM_ERR Code | Indicates |
| RVCM_OK | No error. The call completed successfully. |
| RVCM_ERR_INVALID_SESSION | The function received a session argument that is not a valid rv_session (for example, NULL, or a session that has already terminated). |
| RVCM_ERR_BAD_ARG | The function received an illegal argument. |
| RVCM_ERR_SESSION_NOT_ENABLED | The function received a session that is not enabled for delivery tracking. |

### See Also

vcm_QueueAcceptTime(). below

### rvcm_QueueAcceptTime()

### Function

### Declaration

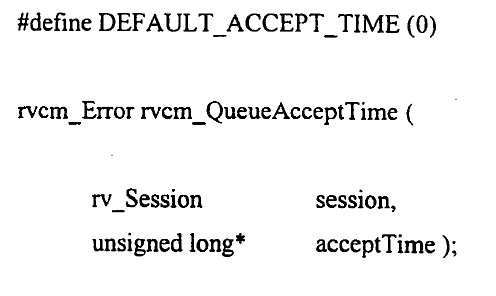

### Purpose

Extract the accept time parameter of a queue member session.

### Remarks

When this session, acting as the scheduler, assigns a task to a listener (another queue member session), it sets a timer for the accept time (in milliseconds). If the timer elapses before the scheduler receives acceptance from the listener, the scheduler reassigns the task to another listener.

Zero is a special value, which specifies no limit on the acceptance time (the scheduler does not set a timer).

Enabling a session as a queue member tacitly sets its accept time parameter to DEFAULT_ACCEPT_TIME (zero).

### Parameters

| Parameter | Description |
|---|---|
| session | A session in a distributed queue. |
| acceptTime | This location receives the stored time limit (in milliseconds) for acceptance of tasks. |

### Errors

| **RVCM_ERR Code** | **Indicates** |
|---|---|
| RVCM_OK | No error. The call completed successfully. |

rvcm_Qz,QueueAcceptTime()

| **RVCM_ERR Code** | **Indicates** |
|---|---|
| RVCM_ERR_INVALID_SESSION | The function received a session argument that is not a valid rv_session (for example, NULL, or a session that has already terminated). |
| RVCM_ERR_BAD_ARG | The function received an illegal argument. |
| RVCM_ERR_SESSION_NOT_ENABLED | The function received a session that is not enabled for delivery tracking. |

### See Also

rvcm_SetQueueAccepcTime(), above

### rvcm_SetQueueCompleteTime()

### Function

### Declaration

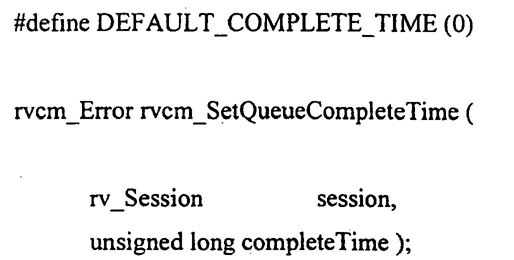

### Purpose

Change the complete time parameter of a queue member session.

### Remarks

When this session, acting as the scheduler, assigns a task to a listener (another queue member session), it sets a timer with this length (in milliseconds). If the timer elapses before the scheduler receives a completion message from the listener, the scheduler reassigns the task to another listener.

Zero is a special value, which specifies no limit on the completion time (the scheduler does not set a timer).

Enabling a session as a queue member tacitly sets its complete time parameter to DEFAULT_COMPLETE_TIME (zero).

### Parameters

| Parameter | Description |
|---|---|
| session | A session in a distributed queue. |
| completeTime | This value (in milliseconds) becomes the new time limit for completion of tasks. It must be greater than the accept time parameter unless the complete time is zero). |

### Errors

| **RVCM_ERR Code** | **Indicates** |
|---|---|
| RVCM_OK | No error. The call completed successfully. |

| **RVCM_ERR Code** | **Indicates** |
|---|---|
| RVCM_ERRJNVALID_SESSION | The function received a session argument that is not a valid rv_session (for example, NULL, or a session that has already terminated). |
| RVCM_ERR_BAD_ARG | The function received an illegal argument. |
| RVCM_ERR_SESSION_NOT_ENABLED | The function received a session that is not enabled for delivery tracking. |

### See Also

rvcm_QueuecompleteTime(), below

### rvcm_QueueCompleteTime()

### Function

### Declaration

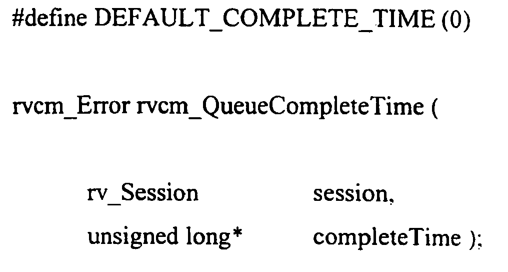

### Purpose

Extract the complete time parameter of a queue member session.

### Remarks

When this session, acting as the scheduler, assigns a task to a listener (another queue member session), it sets a timer for the complete time (in milliseconds). If the timer elapses before the scheduler receives a completion message from the listener, the scheduler reassigns the task to another listener.

Zero is a special value, which specifies no limit on the completion time (the scheduler does not set a timer).

Enabling a session as a queue member tacitly sets its complete time parameter to DEFAULT_COMPLETE_TIME (zero).

### Parameters

| **Parameter** | **Description** |
|---|---|
| session | A session in a distributed queue. |
| complete Time | This location receives the stored time limit (in milliseconds) for completion of tasks. |

### Errors

| **RVCM_ERR Code** | **Indicates** |
|---|---|
| RVCM_OK | No error. The call completed successfully. |

| **RVCM_ERR Code** | **Indicates** |
|---|---|
| RVCM_ERR_INVALID_SESSION | The function received a session argument that is not a valid rv_session (for example, NULL, or a session that has already terminated). |
| RVCM_ERR_BAD_ABG | The function received an illegal argument. |
| RVCM_ERR_SESSION_NOT_ENABLED | The function received a session that is not enabled for delivery tracking. |

### See Also

rvcm_SetQueueCompleteTime (), below
**rvcm_Error rvcm_QueueCompleteTime ()**

### Function

### Declaration

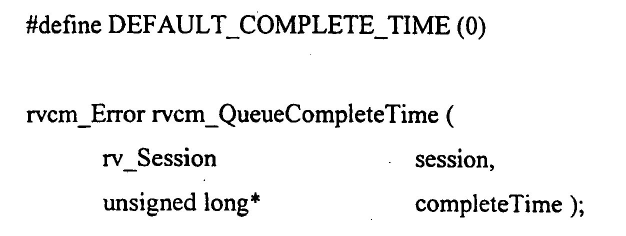

### Purpose

Extract the complete time parameter of a queue member session.

### Remarks

When this session, acting as the scheduler, assigns a task to a listener (another queue member session), it sets a timer for the complete time (in milliseconds). If the timer elapses before the scheduler receives a completion message from the listener, the scheduler reassigns the task to another listener.

Zero is a special value, which specifies no limit on the completion time (the scheduler does not set a timer).

Enabling a session as a queue member tacitly sets its complete time parameter to DEFAULT_COMPLETE_TIME (zero).

### Parameters

| **Parameter** | **Description** |
|---|---|
| session | A session in a distributed queue. |
| completeTime | This location receives the stored time limit (in milliseconds) for completion tasks. |

### Errors

| **RVCM_ERR Code** | **Indicates** |
|---|---|
| RVCM-ERR-INVALID-SESSION | The function received a *session* argument that is not a valid rv_Session (for example, NULL, or a session that has already terminated). |
| RVCM-ERR-BAD-ARG | The function received an illegal argument. |
| RVCM_ERR_SESSION_NOT_ENABLED | The function received a session that is not enabled for delivery tracking. |
| RVCM_OK | No error. The call completed successfully. |

### See Also

rvcm_SetQueueCompeteTime (), above.

### rvcm_SetQueueListenerWeight()

### Function

### Declaration

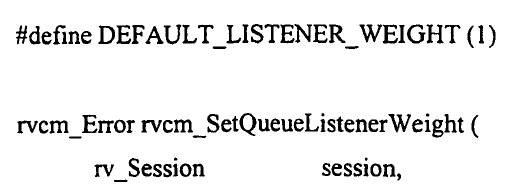

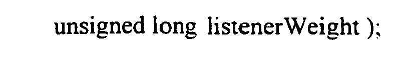

### Purpose

Change the listener weight parameter of a queue member session.

### Remarks

When the scheduler receives a task, it assigns the task to the available listener with the greatest listener weight.

A listener is considered available unless either of these conditions are true:
■ The pending tasks assigned to the listener exceed its task capacity.
■ The listener session is the scheduler. (The scheduler assigns tasks to its own listener only when no other listeners are available.)

Enabling a session as a queue member tacitly sets its listener weight parameter to DEFAULT_LISTENER_WEIGHT (1).

### Parameters

| **Parameter** | **Description** |
|---|---|
| session | A session in a distributed queue. |
| listenerWeight | This value becomes the new listener weight of the session. |

### Errors

| **RVCM_ERR Code** | **Indicates** |
|---|---|
| RVCM_OK | No error. The call completed successfully. |
| RVCM_ERR_INVALID_SESSION | The function received a *session* argument that is not a valid rv_Session (for example, NULL, or a session that has already terminated). |
| RVCM_ERR_BAD_ARG | The function received an illegal argument. |
| RVCM_ERR_SESSION_NOT_ENABLED | The function received a session that is not enabled for delivery tracking. |

### See Also

rvcm_QueueListenerWeight (), below.

### rvcm_QueueListenerWeight()

### Function

### Declaration

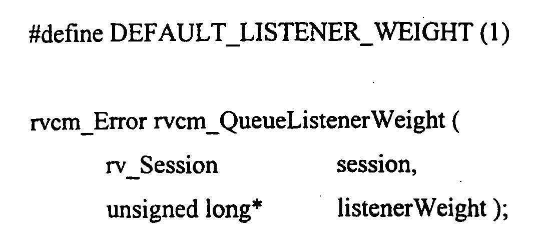

### Purpose

Extract the listener weight parameter of a queue member session.

### Remarks

When the scheduler receives a task, it assigns the task to the available listener with the greatest listener weight.

A listener is considered available unless either of these conditions are true:
■ The pending tasks assigned to the listener exceed its task capacity.
■ The listener session is the scheduler. (The scheduler assigns tasks to its own listener only when no other listeners are available.)

Enabling a session as a queue member tacitly sets its listener weight parameter to DEFAULT_LISTENER_WEIGHT (1).

### Parameters

| **Parameter** | **Description** |
|---|---|
| session | A session in a distributed queue. |
| listenerWeight | This location receives the current listener weight of the session. |

### Errors

| **RVCM_ERR Code** | **Indicates** |
|---|---|
| RVCM_OK | No error. The call completed successfully. |
| RVCM_ERR_INVALID_SESSION | The function received a *session* argument that is not a valid rv_Session )for example. NULL, or a session that has already terminated). |
| RVCM_ERR_BAD_ARG | The function received an illegal argument. |
| RVCM_ERR_SESSION_NOT_ENABLED | The function received a session that is not enabled for delivery tracking. |

### See Also

rvcm_SetQueueListenerWeight (), above.

### rvcm_SetQueueListenerTasks()

### Function

### Declaration

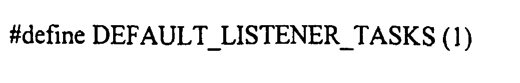

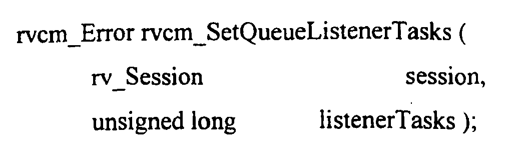

### Purpose

Change the listener tasks parameter of a queue member session.

### Remarks

Task capacity is the maximum number of tasks that a listener can accept. When the number of accepted tasks reaches this maximum, the listener cannot accept additional tasks until it completes one or more of them.

When the scheduler receives a task, it assigns the task to the listener (a queue member) with the greatest listener weight-unless the pending tasks assigned to that listener exceed its task capacity. When the preferred listener has too many tasks, the scheduler assigns the new inbound task to the listener with the next greatest listener weight.

Enabling a session as a queue member tacitly sets its listener tasks parameter to DEFAULT_LISTENER_TASKS (1).

Programmers can tune task capacity based on two factors:
■ Multi-tasking program on multiprocessing hardware.
   On a multiprocessing computer, a multi-threaded program that devotes n threads and n processors to inbound tasks has task capacity n.
■ Communication time lag.
   In most distributed queue applications, the communication time is an insignificant fraction of the task turnaround time. That is, the time required to assign a task and signal its completion is very small compared to the time required to process the task itself. For example, when average task turnaround time is 2000 milliseconds, of which communication time contributes only 10 milliseconds to the total, then task capacity is the same as the number of processors or threads.

However, in some situations communication time can be significant--for example, when the queue members are distributed at distant sites connected by a Wide Area Network (WAN). When communication time is significant, the meaning of task capacity changes; instead of signifying the number of tasks that a listener can process concurrently, it signifies the number of tasks that can fill the listener's capacity despite the communication time lag. For example, when the average task turnaround time is 1500 milliseconds, of which the average task processing time contributes 1000 milliseconds to the total, then setting the task capacity to 3 minimizes the listener's idle time between tasks.

When tuning task capacity to compensate for communication time lag, balance is critical. Underloading a listener (by setting its tasks capacity too low) can cause the listener to remain idle while it waits for the schedule to assign its next task. Conversely, overloading a listener (by setting its task capacity too high) can cause some assigned tasks to wait, while other listeners that might have accepted those tasks remain idle.

### Parameters

| **Parameter** | **Description** |
|---|---|
| session | A session in a distributed queue. |
| listenerTasks | This value becomes the new listener task capacity of the session. The value must be 1 or greater. |

### Errors

| **RVCM_ERR Code** | **Indicates** |
|---|---|
| RVCM_OK | No error. The call completed successfully. |
| RVCM_ERR_INVALID_SESSION | The function received a session argument that is not a valid rv_Session (for example, NULL, or a session that has already terminated). |
| RVCM_ERR_BAD_ARG | The function received an illegal argument. |
| RVCM_ERR_SESSION_NOT_ENABLED | The function received a session that is not enabled for delivery tracking. |

### See Also

rvcm_QueueListenerTasks (), below.

### rvcm_QueueListenerTasks()

### Function

### Declaration

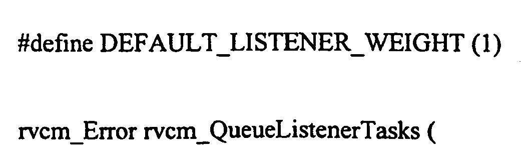

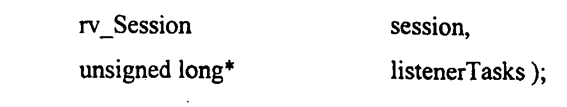

### Purpose

Extract the listener tasks parameter of a queue member session.

### Remarks

Task capacity is the maximum number of tasks that a listener can accept. When the number of accepted tasks reaches this maximum, the listener cannot accept additional tasks until it completes one or more of them.

When the scheduler receives a task, it assigns the task to the listener (a queue member) with the greatest listener weight--unless the pending tasks assigned to that listener exceed its task capacity. When the preferred listener has too many tasks, the scheduler assigns the new inbound task to the listener with the next greatest listener weight.

Enabling a session as a queue member tacitly sets its listener tasks parameter to DEFAULT_LISTENER_TASKS (1).

### Parameters

| **Parameter** | **Description** |
|---|---|
| session | A session in a distributed queue. |
| listenerTasks | This location receives the current listener task capacity of the session. |

### Errors

| **RVCM_ERR Code** | **Indicates** |
|---|---|
| RVCM_OK | No error. The call completed successfully. |

| **RVCM_ERR Code** | **Indicates** |
|---|---|
| RVCM_ERR_INVALID_SESSION | The function received a session argument that is not a valid rv_session (for example, NULL, or a session that has already terminated). |
| RVCM_ERR_BAD_ARG | The function received an illegal argument. |
| RVCM_ERR_SESSION_NOT_ENABLED | The function received a session that is not enabled for delivery tracking. |

### See Also

rvcm_SetQueueListenerTasks(), above.

## Claims

1. A computer-implemented method in a computer-based publish/subscribe system having a subscriber application (20) that has previously subscribed to receive particular type of messaged for delivery of messages from a publisher application (10) to the subscriber application (20) where the publisher application and the subscriber application are part of an anonymous publish/subscribe computer system, the method is **characterized by** the steps:
receiving, at the publisher application (10), a certified messaging subscription request, said certified messaging subscription request including a subscriber name identifying the subscriber application, an address where the subscriber application (20) receives messages, and a subject name associated with and identifying the particular type of message for which a certified messaging session is to be established;
responsive to receiving the certified messaging subscription request, establishing the certified messaging session with the subscriber application (20) by adding the subscriber name to a message ledger at the publisher application (10), and communicating an acknowledgment message to the subscriber application (20), the acknowledgment message acknowledging the establishment of the certified messaging session; and
attempting to deliver a certified message of the particular type in accordance with the certified messaging session by assigning a sequence number to the certified message, addressing the certified message to the address where the subscriber application receives messages, communicating the certified message from the publisher application to the subscriber application, recording a delivery attempt of the certified message in the ledger, and retaining the certified message in the ledger at least until the publisher application has received a confirmation message from the subscriber application, the confirmation message confirming receipt of the certified message at the subscriber application.

2. The method of claim 1, further comprising:
responsive to receiving, at the publisher application,
a confirmation message confirming the receipt of the certified message identified by the assigned sequence number at the subscriber application, updating the ledger at the publisher application to indicate the certified message identified by the assigned sequence number was received by the subscriber application.

3. The method of claim 1, further comprising:
responsive to receiving, at the publisher application,
a confirmation message confirming the receipt of the certified message identified by the assigned sequence number at the subscriber application, deleting the certified message identified by the assigned sequence number from the ledger at the publisher application.

4. The method of claim 3, further comprising the step:
deleting the certified message identified by the assigned sequence number from the ledger if the ledger indicates that all subscriber applications, to which certified messages identified by the assigned sequence number has been sent, have confirmed the receipt of the certified message identified by the assigned sequence number.

5. The method of claim 1, further comprising:
communicating a confirmation request from the publisher application to the subscriber application if the publisher application has not received a confirmation message from the subscriber application within a predetermined period of time after attempting to deliver the certified message identified by the assigned sequence number, the confirmation request requesting that the subscriber application acknowledge receipt of the certified message identified by the assigned sequence number.

6. The method of claim 1, wherein the ledger is a file-based ledger, and the certified messaging session is persistent beyond termination and restart of the publisher application and/or the subscriber application.

7. The method of claim 1, wherein prior to establishing the certified messaging session with the subscriber application, the publisher application, with which the subscriber application has previously subscribed for a particular type of message, publishes messages that are communicated to the subscriber application without the publisher application having knowledge of the existence of the subscriber application.

8. The method of claim 1, further comprising the steps:
communicating a certified messaging subscription request from the subscriber application to the publisher application, said certified messaging subscription request including a subscriber name identifying the subscriber application, an address where the subscriber application receives messages, an a subject name associated with and identifying the particular type of message for which the certified messaging session is to be established; receiving, at the subscriber application, an acknowledgement message form the publisher application, said acknowledgment message acknowledging the establishment of the certified messaging session;
receiving, at the subscriber application, a certified message from the publisher application, in accordance with the certified messaging session, the certified message identified by a sequence number; and
responsive to receiving, at the subscriber application, the certified message identified by the sequence number from the publisher application, updating a ledger at the subscriber application to indicate the receipt of the certified message identified by the sequence number, and communicating a confirmation message to the publisher application, the confirmation message confirming receipt of the certified message identified by the sequence number at the subscriber application.

9. The method of claim 8, further comprising:
after communicating a confirmation message to the publisher application, receiving a confirmation request from the publisher application, the confirmation request requesting a confirmation message from the subscriber application to confirm receipt of a certified message having a particular sequence number;
verifying whether the ledger indicates a certified message having the particular sequence number has been received at the subscriber application, and if so, communicating a second confirmation message to the publisher application, the second confirmation message confirming receipt of the certified message having the particular sequence number at the subscriber application.

10. The method of claim 8, further comprising:
after communicating a confirmation message to the publisher application, receiving a second certified message having a sequence number indicating a previous certified message
was sent by the publisher application, but not received by the subscriber application; and
communicating a certified confirmation request to the publisher application, the certified confirmation request including a sequence number associated with a certified message that the ledger indicates was previously received at the subscriber application.

11. The method of claim 8, wherein the ledger is a file-based ledger, and the certified messaging session is persistent beyond termination and restart of the publisher application and/or the subscriber application.

12. A computer-based publish/subscribe system having a subscriber application (20) that has previously subscribed to receive particular type of message, and a publisher application (10) for communicating messages to a subscriber application (20), the publisher application and the subscriber application are part of an anonymous publish/subscribe computer system, **characterized in that** the publisher application comprising:
a process to receive a certified messaging subscription request, said certified messaging subscription request including a subscriber name identifying the subscriber application (20), an address where the subscriber application receives messages, and a subject name associated with and identifying the particular type of message for which the certified messaging session is to be established;
a process to establish the certified messaging session with the subscriber application (20) in response to receiving the certified messaging subscription request by adding the subscriber name to a message ledger at the publisher application (10), and communicating an acknowledgment message to the subscriber application, the acknowledgment message to acknowledge the establishment of the certified messaging session; and
a certified delivery process to attempt to deliver a certified message of the particular type in accordance with the certified messaging session by assigning a sequence number to the certified message, addressing the certified message to the address where the subscriber application (20) receives messages, communicating the certified message from the publisher application (10) to the subscriber application, recording a delivery attempt of the certified message in the ledger, and retaining the certified message in the ledger at least until the publisher application (has received a confirmation message from the subscriber application, the confirmation message confirming receipt of the certified message at the subscriber application; and
responsive to receiving, at the publisher application, a confirmation message confirming the receipt of the certified message identified by the assigned sequence number at the subscriber application, updating the ledger at the publisher application to indicate the certified message identified by the assigned sequence number was received by the subscriber application.

13. The system of claim 12, wherein, responsive to receiving, at the publisher application, a confirmation message confirming receipt of the certified message identified by the assigned sequence number at the subscriber application, the certified delivery process is to delete the certified message identified by the assigned sequence number from the ledger at the publisher application.

14. The system of claim 12, wherein, responsive to receiving, at the publisher application, a confirmation message confirming receipt of the certified message identified by the assigned sequence number at the subscriber application, the certified delivery process is to delete the certified message identified by the assigned sequence number from the ledger if the ledger indicates that all subscriber applications, to which certified message identified by the assigned sequence number has been sent, have confirmed receipt of the certified message identified by the assigned sequence number.

15. The system of claim 12, wherein the certified delivery process is to communicate a confirmation to the subscriber application if the publisher application has not received a confirmation message from the subscriber application within a predetermined period of time after attempting to deliver the certified message identified by the assigned sequence number, the confirmation request requesting that the subscriber application acknowledge receipt of the certified message identified by the assigned sequence number.

16. The system of claim 12, wherein the ledger is a file-based ledger, and the certified messaging session is persistent beyond the publisher application or the subscriber application being terminated and restarted.

17. The system of claim 12, further comprising:
a messaging process to publish messages with a subject name associated with content of the messages, the messages communicated to subscriber applications that have subscribed to receive messages having a particular subject name without the publisher application having knowledge of the existence of the subscriber application.

18. The system of claim 12, further **characterized in that** the subscriber application (20) comprising:
a process to communicate a certified messaging subscription request from the subscriber application to the publisher application, said certified messaging subscription request including a subscriber name identifying the subscriber application, an address where the subscriber application receives messages, and a subject name associated with and identifying the particular type of message for which the certified messaging session is to be established;
a process to receive, at the subscriber application, an acknowledgement message form the publisher application, said acknowledgment message acknowledging the establishment of the certified messaging session; and
a certified delivery process to receive, at the subscriber application, a certified message from the publisher application in accordance with the certified messaging session, the certified message identified by the sequence number, and responsive to receiving the certified message identified by the sequence number from the publisher application, to update a ledger at the subscriber application to indicate the receipt of the certified message identified by the assigned sequence number, and to communicate a confirmation message to the publisher application, the confirmation message confirming receipt of the certified message identified by the sequence number at the subscriber application.

19. The system of claim 18, wherein, after communicating a confirmation message to the publisher application, the certified message process is to receive a confirmation request from the publisher application, the confirmation request requesting a confirmation message from the subscriber application to confirm receipt of a certified message having a particular sequence number;
wherein the certified message process is to verify whether the ledger indicates a certified message having the particular sequence number has been received at the subscriber application, and if so, to communicate a second confirmation message to the publisher application, the second confirmation message confirming receipt of the certified message having the particular sequence number at the subscriber application.

20. The system of claim 18, wherein, after communicating a confirmation message to the publisher application, the certified message process is to receive a second certified message having a sequence number indicating a previous certified message was sent by the publisher application, but not received by the subscriber application, and wherein the certified process is to communicate a certified confirmation request to the publisher application, the certified confirmation request including a sequence number associated with a certified message that the ledger indicates was previously received at the subscriber application.

21. The system of claim 18, wherein the ledger is a file-based ledger, and the certified messaging session is persistent beyond the publisher application or the subscriber application being terminated and restarted.

## Patentansprüche

1. Ein computerimplementiertes Verfahren in einem computerbasierten Veröffentlichungs/Abonnier-System, das eine Abonnentanwendung (20), die vorausgehend zum Empfang eines bestimmten Typs von Nachrichten abonniert wird, zur Zustellung von Nachrichten von einer Herausgeberanwendung (10) zu der Abonnentanwendung (20) aufweist, wobei die Herausgeberanwendung und die Abonnentenanwendung Teil eines anonymen Veröffentlichungs/Abonnier-Computersystems sind, das Verfahren ist durch die Schritte gekennzeichnet:
Empfangen einer zertifizierten Nachrichten-Abonnementanforderung in der Herausgeberanwendung (10), besagte zertifizierte Nachrichten-Abonnementanforderung enthält einen Abonnentennamen, der die Abonnentanwendung identifiziert, eine Adresse, wo die Abonnentanwendung (20) Nachrichten empfängt, und einen Gegenstandsnamen, der mit dem speziellen Typ der Nachricht verbunden ist und diesen identifiziert, für den eine zertifizierte Nachrichtensitzung einzurichten ist;
in Beantwortung des Empfangs der zertifizierten Nachrichten-Abonnementanforderung, Einrichten der zertifizierten Nachrichtensitzung mit der Abonnentanwendung (20) durch Hinzufügung des Abonnementennamens zu einem Nachrichten-Protokoll in der Herausgeberanwendung (10), und Übertragen einer Bestätigungsnachricht an die Abonnentanwendung (20), die Bestätigungsnachricht bestätigt das Einrichten der zertifizierten Nachrichtensitzung; und
Versuch einer Zustellung einer Nachricht des speziellen Typs in Übereinstimmung mit der zertifizierten Nachrichtensitzung durch Zuordnung einer Folgenummer zur zertifizierten Nachricht, Adressieren der zertifizierten Nachricht zur Adresse, wo die Abonnentanwendung Nachrichten empfängt, Übertragen einer zertifizierten Nachricht von der Herausgeberanwendung zu der Abonnentanwendung, Aufzeichnen eines versuch einer Zustellung der zertifizierten Nachricht in dem Protokoll wenigstens bis die Herausgeberanwendung eine Bestätigungsnachricht empfangen hat, mit der der Empfang der zertifizierten Nachricht in der Abonnentanwendung bestätigt wird.

2. Das Verfahren von Anspruch 1 umfasst weiter:
in Beantwortung des Empfangs einer Bestätigungsnachricht in der Herausgeberanwendung zur Bestätigung des Empfangs der zertifizierten Nachricht, die durch die zugeordnete Folgenummer in der Abonnentanwendung identifiziert ist, Aktualisieren des Protokolls in der Herausgeberanwendung zur Anzeige, dass die zertifizierte Nachricht, die durch die zugeordnete Folgenummer identifiziert ist, in der Abonnentanwendung empfangen wurde

3. Das Verfahren von Anspruch 1 umfasst weiter: in Beantwortung des Empfangs einer Bestätigungsnachricht in der Herausgeberanwendung zur Bestätigung des Empfangs der zertifizierten Nachricht, die durch die zugeordnete Folgenummer in der Abonnentanwendung identifiziert ist, Löschen der zertifizierte Nachricht, die durch die zugeordnete Folgenummer identifiziert ist, im Protokoll in der Herausgeberanwendung.

4. Das Verfahren von Anspruch 3 umfasst weiter den Schritt:
Löschen der zertifizierten Nachricht, die durch die zugeordnete Folgenummer identifiziert ist, in dem Protokoll, wenn das Protokoll anzeigt, dass alle Abonnentanwendungen, an die zertifizierte, durch die zugeordnete Folgenummer identifizierte Nachrichten gesendet wurden, den Empfang der zertifizierten, durch die zugeordnete Folgenummer identifizierten Nachricht bestätigt haben.

5. Das Verfahren von Anspruch 1 umfasst weiter: Übertragen einer Bestätigungsanforderung von der Herausgeberanwendung zur Abonnentanwendung, wenn die Herausgeberanwendung keine Bestätigungsnachricht von der Abonnentanwendung innerhalb einer vorgegebenen Zeitspanne nach einem Versuch, die zertifizierte durch die zugeordnete Folgenummer identifizierte Nachricht zuzustellen, empfangen hat, die Bestätigungsanforderung fordert, dass die Abonnentanwendung den Empfang der zertifizierten Nachricht bestätigt, die durch die zugeordnete Folgenummer identifiziert ist.

6. Das Verfahren von Anspruch 1, worin das Protokoll ein dateibasiertes Protokoll ist, und die zertifizierte Nachrichtensitzung über die Beendigung und den Neustart der Herausgeberanwendung und/oder der Abonnentanwendung hinaus dauerhaft ist.

7. Das Verfahren von Anspruch 1, worin vor dem Einrichten der zertifizierten Nachrichtensitzung mit der Abonnentanwendung, die Herausgeberanwendung, für die die Abonnentanwendung vorausgehend für einen bestimmten Nachrichtentyp abonniert wurde, eine Nachricht herausgibt, die zu der Abonnentanwendung übertragen wird, ohne dass die Herausgeberanwendung Kenntnis von der Existenz der Abonnentanwendung hat.

8. Das Verfahren von Anspruch 1 umfasst weiter die Schritte:
Übermitteln einer zertifizierten Nachrichten-Abonnementanforderung von der Abonnentanwendung zu der Herausgeberanwendung, besagte zertifizierte Nachrichten-Abonnenmentanforderung enthält einen Abonnentennamen, der die Abonnentanwendung identifiziert, eine Adresse, wo die Abonnentanwendung Nachrichten empfängt, und einen Gegenstandsnamen, der dem bestimmten Nachrichtentyp zugeordnet ist und diesen identifiziert, für den eine zertifizierte Nachrichtensitzung einzurichten ist;
Empfangen in der Abonnentanwendung eine Bestätigungsnachricht von der Herausgeberanwendung, besagte Bestätigungsnachricht bestätigt das Einrichten der zertifizierten Nachrichtensitzung;
Empfangen in der Abonnentanwendung eine zertifizierte Nachricht von der Herausgeberanwendung in Übereinstimmung mit der zertifizierten Nachrichtensitzung, die zertifizierte Nachricht wird durch eine Folgenummer identifiziert; und
in Beantwortung des Empfangs der zertifizierte Nachricht, die durch die Folgenummer identifiziert ist, in der Abonnentanwendung von der Herausgeberanwendung, Aktualisieren des Protokolls in der Abonnentanwendung zur Anzeige des Empfangs der zertifizierten Nachricht, die durch die Folgenummer identifiziert ist, und Übermitteln einer Bestätigungsnachricht zur Herausgeberanwendung, die Bestätigungsnachricht bestätigt den Empfang der zertifizierten Nachricht, die durch die Folgenummer identifiziert ist, in der Abonnentanwendung.

9. Das Verfahren von Anspruch 8 umfasst weiter:
nach Übermittlung einer Bestätigungsnachricht zur Herausgeberanwendung, Empfangen einer Bestätigungsanforderung von der Herausgeberanwendung, die Bestätigungsanforderung fordert von der Abonnentanwendung eine Bestätigung des Empfangs der zertifizierten Nachricht, die durch eine bestimmte Folgenummer identifiziert ist;
Überprüfen, ob das Protokoll anzeigt, dass eine zertifizierte Nachricht, die die bestimmte Folgenummer aufweist, in der Abonnentanwendung empfangen wurde, und wenn dies der Fall ist, Übermitteln einer zweiten Bestätigungsnachricht zur Herausgeberanwendung, die zweite Bestätigungsnachricht bestätigt den Empfangs der zertifizierten Nachricht, die durch die bestimmte Folgenummer identifiziert ist, in der Abonnentanwendung.

10. Das Verfahren von Anspruch 8 umfasst weiter:
nach Übermittlung einer Bestätigungsnachricht zur Herausgeberanwendung, Empfang einer zweiten zertifizierten Nachricht, die eine Folgenummer aufweist, welche anzeigt, dass vorausgehend eine zertifizierte Nachricht durch die Herausgeberanwendung gesendet wurde, aber von der Abonnentanwendung nicht empfangen wurde; und Übermitteln einer zertifizierten Bestätigungsanforderung zu der Herausgeberanwendung, die zertifizierte Bestätigungsanforderung enthält eine Folgenummer, die einer zertifizierten Nachricht zugeordnet ist, für die das Protokoll anzeigt, dass sie vorausgehend von der Abonnentanwendung empfangen wurde.

11. Das Verfahren von Anspruch 8, worin das Protokoll ein dateibasiertes Protokoll ist, und die zertifizierte Nachrichtensitzung über die Beendigung und den Neustart der Herausgeberanwendung und/oder der Abonnentanwendung hinaus dauerhaft ist.

12. Ein computerbasiertes Veröffentlichungs/Abonnier-System, das eine Abonnentanwendung (20), die vorausgehend zum Empfang eines bestimmten Typs von Nachrichten abonniert wird, und eine Herausgeberanwendung (10) zur Zustellung von Nachrichten zu einer Abonnentanwendung (20) aufweist, wobei die Herausgeberanwendung und die Abonnentanwendung Teil eines anonymen Veröffentlichungs/Abonnier-Computersystems sind, **dadurch gekennzeichnet, dass** die Herausgeberanwendung enthält:
einen Prozess zum Empfangen einer zertifizierten Nachrichten-Abonnementanforderung, besagte zertifizierte Nachrichten-Abonnementanforderung enthält einen Abonnementennamen, der die Abonnentanwendung (20) identifiziert, eine Adresse, wo die Abonnentanwendung Nachrichten empfängt, und einen Gegenstandsnamen, der einem bestimmten Nachrichtentyp zugeordnet ist und diesen identifiziert, für den eine zertifizierte Nachrichtensitzung einzurichten ist;
ein Prozess zum Einrichten der zertifizierten Nachrichtensitzung mit der Abonnentanwendung (20) in Beantwortung auf den Empfang des zertifizierten Nachrichten-Abonnementanforderung durch Hinzufügung des Abonnentennamens zu einem Nachrichten-Protokoll in der Herausgeberanwendung (10), und Übertragen einer Bestätigungsnachricht zu der Abonnentanwendung, die Bestätigungsnachricht bestätigt das Einrichten der zertifizierten Nachrichtensitzung; und
ein zertifizierter Zustellungsprozess zum Versuch einer Zustellung einer Nachricht des bestimmen Nachrichtentyps in Übereinstimmung mit der zertifizierten Nachrichtensitzung durch Zuordnung einer Folgenummer zur zertifizierten Nachricht, Adressieren der zertifizierten Nachricht zur Adresse, wo die Abonnentanwendung (20) Nachrichten empfängt, Übertragen einer zertifizierten Nachricht von der Herausgeberanwendung (10) zu der Abonnentanwendung, Aufzeichnung eines Versuch einer Zustellung der zertifizierten Nachricht in dem Protokoll und Behalten der zertifizierten Nachricht in dem Protokoll wenigstens bis die Herausgeberanwendung eine Bestätigungsnachricht von der Abonnentanwendung empfangen hat, die Bestätigungsnachricht bestätigt den Empfang der zertifizierten Nachricht in der Abonnentanwendung; und
in Beantwortung des Empfangs einer Bestätigungsnachricht in der Herausgeberanwendung zur Bestätigung des Empfangs der zertifizierten Nachricht, die durch die zugeordnete Folgenummer in der Abonnentanwendung identifiziert ist, Aktualisieren des Protokolls in der Herausgeberanwendung zur Anzeige, dass die zertifizierte Nachricht empfangen wurde, die durch die zugeordnete Folgenummer in der Abonnentanwendung identifiziert ist.

13. Das System von Anspruch 12, worin in Beantwortung des Empfangs einer Bestätigungsnachricht in der Herausgeberanwendung zur Bestätigung des Empfangs der zertifizierten Nachricht, die durch die zugeordnete Folgenummer in der Abonnentanwendung identifiziert ist, der zertifizierte Zustellungsprozess ein Löschen der zertifizierten Nachricht, die durch die zugeordnete Folgenummer identifiziert ist, im Protokoll in der Herausgeberanwendung durchführt.

14. Das System von Anspruch 12, worin in Beantwortung des Empfangs einer Bestätigungsnachricht in der Herausgeberanwendung zur Bestätigung des Empfangs der zertifizierten Nachricht, die durch die zugeordnete Folgenummer in der Abonnentanwendung identifiziert ist, der zertifizierte Zustellungsprozess ein Löschen der zertifizierten Nachricht, die durch die zugeordnete Folgenummer in der Abonnentanwendung identifiziert ist, in dem Protokoll durchführt, wenn das Protokoll anzeigt, dass alle Abonnentanwendungen, zu denen die zertifizierte, durch die zugeordnete Folgenummer identifizierte Nachricht gesendet wurde, den Empfang der zertifizierten, durch die zugeordnete Folgenummer identifizierten Nachricht bestätigt haben.

15. Das System von Anspruch 12, worin der zertifizierte Zustellungsprozess ein Übertragen einer Bestätigung zur Abonnentanwendung bewirkt, wenn die Herausgeberanwendung keine Bestätigungsnachricht von der Abonnentanwendung innerhalb einer vorgegebenen Zeitspanne nach einem Versuch, die zertifizierte durch die zugeordnete Folgenummer identifizierte Nachricht zuzustellen, empfangen hat, die Bestätigungsanforderung fordert, dass die Abonnentanwendung den Empfang der zertifizierten Nachricht bestätigt, die durch die zugeordnete Folgenummer identifiziert ist.

16. Das System von Anspruch 12, worin das Protokoll ein dateibasiertes Protokoll ist, und die zertifizierte Nachrichtensitzung über die Beendigung und den Neustart der Herausgeberanwendung oder der Abonnentanwendung hinaus dauerhaft ist.

17. Das System von Anspruch 12 weiter einen Nachrichtenprozess umfasst zum Herausgeben von Nachrichten mit einem Gegenstandsnamen, der dem Inhalt der Nachrichten zugeordnet ist, die Nachrichten werden zu Abonnentanwendungen übertragen wird, die den Empfang von Nachrichten mit einem bestimmten Gegenstandsnamen abonniert haben, ohne dass die Herausgeberanwendung Kenntnis von der Existenz der Abonnentanwendung hat.

18. Das System von Anspruch 12, weiter **gekennzeichnet dadurch**, das die Abonnentanwendung (20) umfasst:
einen Prozess zur Übermittlung einer zertifizierten Nachrichten-Abonnementanforderung von der Abonnentanwendung zu der Herausgeberanwendung, besagte zertifizierte Nachrichten-Abonnementanforderung enthält einen Abonnentennamen, der die Abonnentanwendung identifiziert, eine Adresse, wo die Abonnentanwendung Nachrichten empfängt, und einen Gegenstandsnamen, der dem bestimmten Nachrichtentyp zugeordnet ist und diesen identifiziert, für den eine zertifizierte Nachrichtensitzung einzurichten ist;
einen Prozess zum Empfang einer Bestätigungsnachricht in der Abonnentanwendung von der Herausgeberanwendung, besagte Bestätigungsnachricht bestätigt das Einrichten der zertifizierten Nachrichtensitzung; und
einen zertifizierten Zustellungsprozess zum Empfang einer zertifizierte Nachricht, die in der Abonnentanwendung in Übereinstimmung mit der zertifizierten Nachrichtensitzung von der Herausgeberanwendung empfangen wird und die durch eine Folgenummer identifiziert wird, und der in Beantwortung des Empfangs der zertifizierten Nachricht, die durch die Folgenummer identifiziert ist, von der Herausgeberanwendung, zum Aktualisieren des Protokolls in der Abonnentanwendung für eine Anzeige des Empfangs der zertifizierten Nachricht dient, die durch die Folgenummer identifiziert ist, und der zum Übermitteln einer Bestätigungsnachricht an die Herausgeberanwendung dient, die Bestätigungsnachricht bestätigt den Empfang der zertifizierten Nachricht, die durch die Folgenummer identifiziert ist, in der Abonnentanwendung.

19. Das System von Anspruch 18, worin nach Übermittlung einer Bestätigungsnachricht zur Herausgeberanwendung, der zertifizierte Nachrichtenprozess eine Bestätigungsanforderung von der Herausgeberanwendung empfängt, die Bestätigungsanforderung fordert in der Abonnentanwendung eine Bestätigungsnachricht für den Empfangs der zertifizierten Nachricht an, die durch die zugeordnete Folgenummer identifiziert ist;
worin der zertifizierte Nachrichtenprozess zur Überprüfung dient, ob das Protokoll anzeigt, dass eine zertifizierte Nachricht, die die bestimmte Folgenummer aufweist, in der Abonnentanwendung empfangen wurde, und wenn dies der Fall ist, eine zweite Bestätigungsnachricht zur Herausgeberanwendung übermittelt, die zweite Bestätigungsnachricht bestätigt den Empfangs der zertifizierten Nachricht, die durch die bestimmte Folgenummer identifiziert ist, in der Abonnentanwendung.

20. Das System von Anspruch 18, worin nach Übermittlung einer Bestätigungsnachricht zur Herausgeberanwendung, der zertifizierte Nachrichtenprozess eine zweite zertifizierten Nachricht empfängt, die eine Folgenummer aufweist, welche anzeigt, dass vorausgehend eine zertifizierte Nachricht durch die Herausgeberanwendung gesendet wurde, aber von der Abonnentanwendung nicht empfangen wurde, und worin der zertifizierte Prozess eine zertifizierten Bestätigungsanforderung an die Herausgeberanwendung übermittelt, die zertifizierte Bestätigungsanforderung enthält eine Folgenummer, die einer zertifizierten Nachricht zugeordnet ist, für die das Protokoll anzeigt, dass sie vorausgehend von der Abonnentanwendung empfangen wurde.

21. Das System von Anspruch 18, worin das Protokoll ein dateibasiertes Protokoll ist, und die zertifizierte Nachrichtensitzung über die Beendigung und den Neustart der Herausgeberanwendung oder der Abonnentanwendung hinaus dauerhaft ist.

## Revendications

1. Procédé mis en oeuvre par ordinateur au sein d'un système informatisé de diffusion / abonnement comportant un programme de gestion de liste d'abonnés (20) préalablement inscrits pour recevoir certaines catégories de messages, pour la diffusion de message à partir d'un programme de diffusion (10) envoyée vers le programme de gestion de liste d'abonnés (20) dans lequel le programme de diffusion et le programme de gestion de liste d'abonnés font partie d'un dispositif informatisé de diffusion / abonnement anonyme, ce procédé étant **caractérisé par** les étapes suivantes :
- la réception par le programme de diffusion (10) d'une requête certifiée de messagerie d'abonné, ladite requête certifiée de messagerie d'abonné comportant un nom d'abonné permettant d'identifier le programme de gestion de liste d'abonné , une adresse à laquelle le programme de gestion de liste d'abonnés (20) reçoit les messages et un identifiant associé pour l'identification du type particulier de message pour lequel une session de messagerie certifiée doit être ouverte ;
- en réponse à la réception de la requête certifiée de messagerie d'abonné, l'ouverture d'une session de messagerie certifiée avec le programme de gestion de liste d'abonnés (20) par l'ajout du nom d'abonné à un registre de messagerie du programme de diffusion (10), et l'envoi d'un accusé de réception au programme de gestion de liste d'abonnés (20), le message d'accusé de réception attestant de l'établissement de la session de messagerie certifiée, et
- la tentative de distribution d'un message certifié du type particulier correspondant à la session de messagerie certifiée par l'attribution d'une séquence chiffrée au message certifié, en adressant le message certifié à l'adresse à laquelle le programme de gestion de liste d'abonnés reçoit les messages, en communiquant les messages certifiés à partir du programme de diffusion au programme de gestion de liste d'abonnés, en
enregistrant la tentative d'envoi du message certifié dans la liste de diffusion et en conservant le message certifié dans la liste de diffusion au moins jusqu'à ce que le programme de diffusion ait reçu le message de confirmation du programme de gestion de liste d'abonnés, le message de confirmation attestant de la réception du message confirmé par le programme de gestion de liste d'abonnés.

2. Procédé selon la revendication 1 comportant en plus:
- en réponse à la réception par le programme de diffusion par voie d'un message de confirmation attestant de la réception du message certifié identifié par la séquence de chiffres attribuée au programme de gestion de liste d'abonnés, la mise à jour du registre de diffusion par le programme de diffusion pour indiquer que le message certifié identifié par la séquence chiffrée a été reçu par le programme de gestion de liste d'abonnés.

3. Procédé selon la revendication 1 comportant par ailleurs :
- en réponse à la réception par le programme de diffusion d'un message de confirmation attestant de réception du message certifié identifié par la séquence chiffrée par le programme de gestion de liste d'abonnés, l'effacement du message certifié identifié par la séquence chiffrée au sein du registre de diffusion du programme de diffusion.

4. Procédé selon la revendication 3 comportant par ailleurs l'étape suivante:
- l'effacement du message certifié identifié par la séquence numérique attribuée à partir du registre de diffusion si le registre de diffusion indique que toutes les programmes de gestion de liste d'abonnés auxquels des messages certifiés identifiés par les séquences chiffrées et attribuées ont été envoyées et ont confirmé la réception du message certifié identifié par la séquence chiffrée.

5. Procédé selon la revendication 1 comportant par ailleurs:
- la communication d'une demande de confirmation à partir du programme de diffusion vers le programme de gestion de liste d'abonnés si le programme de diffusion n'a pas reçu un message de confirmation du programme de gestion de liste d'abonnés au cours d'une période de temps prédéterminée, après tentative d'envoi d'un message certifié et identifié par la séquence numérique chiffrée, la demande de confirmation vérifiant que le programme de gestion de liste d'abonnés accuse réception du message certifié identifié par la séquence numérique chiffrée.

6. Procédé selon la revendication 1 dans lequel le registre de diffusion est une liste sous forme de fichier, et la session de messagerie certifiée est ouverte en continu jusqu'à sa clôture et redémarre le programme de diffusion et/ou le programme de gestion de liste d'abonnés.

7. Procédé selon la revendication 1, dans lequel avant établissement de la session de messagerie certifiée avec le programme de gestion de liste d'abonnés, le programme de diffusion, auprès duquel le programme de gestion de liste d'abonnés s'est préalablement référencé au regard d'un certain type de message, diffuse des messages qui sont communiqués au programme de gestion de liste d'abonnés sans que le programme de diffusion ait connaissance de l'existence du programme de gestion de liste d'abonnés.

8. Procédé selon la revendication 1, comportant par ailleurs l'étape suivante :
- la communication d'une demande certifiée d'abonnement à la messagerie à partir du programme de gestion de liste d'abonnés vers le programme de diffusion, ladite demande certifiée d'abonnement à une messagerie comportant un nom d'abonné permettant d'identifier le programme de gestion de liste d'abonné, une adresse à laquelle le programme de gestion de liste d'abonnés reçoit les messages et un identifiant associé pour l'identification du type particulier de message pour lequel une session de messagerie certifiée doit être ouverte,
- la réception par le programme de gestion de liste d'abonnés d'un message d'accusé de réception à partir du programme de publication, ledit message d'accusé de réception attestant de l'ouverture de la session certifiée de messagerie ,
- la réception par le programme de gestion de liste d'abonnés d'un message certifié du programme de diffusion, correspondant à la session de messagerie certifiée, le message certifié étant identifié par une séquence chiffrée, et
- en réponse à la réception par le programme de gestion de liste d'abonnés d'un message certifié identifié par une séquence chiffrée par le programme de diffusion, la mise à jour du registre de diffusion par le programme de gestion de liste d'abonnés pour indiquer la réception d'une message certifié et identifié par une séquence chiffrée et la communication d'un message de confirmation au programme de diffusion, le message de confirmation attestant de la réception par le programme de gestion de liste d'abonnés du message certifié identifié par la séquence chiffrée.

9. Procédé selon la revendication 8 comportant par ailleurs:
- après communication d'un message de confirmation au programme de diffusion, la réception d'une requête de confirmation de la part du programme de diffusion, la requête de confirmation sollicitant un message de confirmation du programme de gestion de liste d'abonnés pour confirmer la réception d'un message certifié comportant une séquence chiffrée spécifique,
- la vérification que le registre de diffusion comporte un message certifié ayant la séquence chiffrée spécifique qui a été reçue par le programme de gestion de liste d'abonnés, et dans l'affirmatif, la communication d'un second message de confirmation au programme de diffusion, le second message de confirmation attestant de la réception du message certifié comportant la séquence chiffrée spécifique vers le programme de gestion de liste d'abonnés.

10. Procédé selon la revendication 8 comportant par ailleurs :
- après communication d'un message de confirmation au programme de publication, la réception d'un deuxième message certifié comportant une séquence chiffrée indiquant qu'un message chiffrée a précédemment été envoyé par le programme de diffusion mais n'a pas été reçue par le programme de gestion de liste d'abonnés , et
- la communication d'une requête certifiée de confirmation au programme de publication, la requête certifiée de confirmation comportant une séquence chiffrée associée à un message certifié que le registre de diffusion a au préalable identifié comme étant reçu par le programme de gestion de liste d'abonnés.

11. Procédé selon la revendication 8, dans lequel le registre de diffusion est sous forme d'un fichier, et la session de messagerie certifiée est ouverte en continu jusqu'à sa fin et redémarre le programme de diffusion et/ou le programme de gestion de liste d'abonnés.

12. un système informatisé de diffusion et d'abonnement comportant un programme de gestion de liste d'abonnés (20) préalablement inscrits pour recevoir certaines catégories de messages, pour la diffusion de message à partir d'un programme de diffusion (10) envoyée vers le programme de gestion de liste d'abonnés (20) dans lequel le programme de diffusion et le programme de gestion de liste d'abonnés font partie d'un dispositif informatisé anonyme de diffusion / abonnement, **caractérisé en ce que** le programme de diffusion comporte :
- un processus pour la réception d'une requête certifiée d'abonnement de messagerie, ladite requête comportant un nom d'abonné permettant d'identifier le programme de gestion de liste d'abonné , une adresse à laquelle le programme de gestion de liste d'abonnés reçoit les messages et un identifiant associé pour l'identification du type particulier de message pour lequel une session de messagerie certifiée doit être ouverte ;
- un processus pour établir la session certifiée de messagerie avec le programme de gestion de liste d'abonnés (20) en réponse à la réception de la requête certifiée de messagerie d'abonné, par l'adjonction du nom de l'abonné à un registre de diffusion du programme de diffusion (10) et la communication d'un message d'accusé de réception au programme de gestion de liste d'abonnés, le message d'accusé de réception attestant de l'ouverture de la session certifiée de messagerie , et
- un processus certifié de diffusion pour tenter de diffuser un message certifié du type particulier correspondante à l'ouverture de la session certifiée de messagerie par l'attribution d'une séquence chiffrée au message certifié, l'envoi du message certifié à l'adresse à laquelle le programme de gestion de liste d'abonnés (20) reçoit les messages, la communication du message certifié à partir du programme de diffusion (10) vers le programme de gestion de liste d'abonnés, l'enregistrement de la tentative d'envoi du message certifié dans le registre de diffusion et la conservation du message certifié dans le registre au moins jusqu'à ce que le programme de diffusion ait reçu un message de confirmation du programme de gestion de liste d'abonnés, le message de confirmation attestant de la réception du message certifié par le programme de gestion de liste d'abonnés, la réponse à la réception par le programme de diffusion d'un message de confirmation attestant de la réception du message certifié identifié par la séquence chiffrée attribuée au programme de gestion de liste d'abonnés, la mise à jour du registre de diffusion du programme de diffusion pour mentionner que le message certifié identifié par la séquence chiffrée attribuée a été reçue par le programme de gestion de liste d'abonnés.

13. Système selon la revendication 12, dans lequel en réponse à la réception par le programme de diffusion d'un message de confirmation attestant de la réception du message certifié identifié par la séquence chiffrée attribuée au programme de gestion de liste d'abonnés, le processus de diffusion certifié efface du registre de diffusion le message certifié identifié par la séquence chiffrée attribuée au programme de diffusion.

14. Système selon la revendication 12, dans lequel en réponse à la réception par le programme de diffusion d'un message de confirmation attestant de la réception du message certifié identifié par la séquence chiffrée attribuée au programme de gestion de liste d'abonnés, le processus de diffusion certifié efface du registre de diffusion le message certifié identifié par la séquence chiffrée attribuée si le registre de diffusion indique que tous les programmes de gestion de liste d'abonnés auxquels les messages certifiés identifiés par la séquence chiffrée attribuée ont été envoyés, ont confirmé la réception du message certifié identifié par la séquence chiffrée attribuée.

15. Système selon la revendication 12 dans lequel le processus de diffusion certifiée communique une confirmation au programme de gestion de liste d'abonnés si le programme de diffusion n'a pas reçu un message de confirmation du programme de gestion de liste d'abonnés au cours d'une période de temps prédéterminée après tentative d'envoyer le message certifié identifié par la séquence chiffrée attribuée, la requête de confirmation demandant que le programme de gestion de liste d'abonnés accuse réception du message certifié identifié par la séquence chiffrée attribuée.

16. Système selon la revendication 12 dans lequel le registre de diffusion est sous forme d'un fichier, et la session certifiée de messagerie est ouverte en continu jusqu'à ce que le programme de diffusion ou le programme de gestion de liste d'abonnés ait été terminé et redémarré.

17. Système selon la revendication 12 comportant par ailleurs un processus de messagerie destinée à diffuser une message avec un identifiant associé au contenu du message, le message communiqué aux programmes de gestion de liste d'abonnés qui ont été référencés pour recevoir des messages comportant un sujet particulier sans que le programme de diffusion ait connaissance de l'existence des programmes de gestion de liste d'abonnés.

18. Système selon la revendication 12, **caractérisée par** ailleurs en ce que le programme de gestion de liste d'abonnés (20) comporte les étapes suivantes :
- un processus pour communiquer une requête d'abonnement à une messagerie certifiée à partir d'un programme de gestion de liste d'abonnés vers un programme de diffusion, ladite requête d'abonnement à une messagerie certifiée comportant un nom d'abonné identifiant le programme de gestion de liste d'abonnés, une adresse à laquelle le programme de gestion de liste d'abonnés reçoit les messages et un objet associé pour l'identification du type particulier des messages pour lesquels la session certifiée de messagerie doit être ouverte,
- un processus pour la réception par le programme de gestion de liste
d'abonnés d'un message d'accusé de réception du programme de diffusion, ledit message d'accusé de réception attestant de l'ouverture d'une session certifiée de messagerie et,
- un processus de diffusion certifiée pour la réception par le programme de gestion de liste d'abonnés d'un message certifié du programme de diffusion correspondant à la session certifiée de messagerie, le message certifié étant identifié par la séquence chiffrée, et répondant à la réception du message certifié et identifié par la séquence chiffrée à partir du programme de diffusion, pour mettre à jour un registre de diffusion du programme de gestion de liste d'abonnés et indiquer la réception du message certifié identifié par la séquence chiffrée attribuée, et pour envoyer un message de confirmation au programme de diffusion, le message de confirmation attestant de la réception du message certifié identifié par la séquence chiffrée du programme de gestion de liste d'abonnés.

19. Système selon la revendication 18 ; dans lequel après communication d'un message de confirmation au programme de diffusion, le processus de message certifié reçoit une demande de confirmation du programme de publication, la demande de confirmation sollicitant un message de confirmation du programme de gestion de liste d'abonnés pour attester de la réception d'un message certifié comportant la séquence chiffrée spécifique, dans lequel le processus de messagerie certifié vérifie si le registre de diffusion comporte un message certifié ayant la séquence chiffrée spécifique qui a été reçu par le programme de gestion de liste d'abonnés, et dans l'affirmative, communique un deuxième message de confirmation au programme de diffusion, le deuxième message de confirmation attestant de la réception du message certifié comportant une séquence chiffrée spécifique au programme de gestion de liste d'abonnés.

20. Système selon la revendication 18,, dans lequel après avoir communiqué un message de confirmation au programme de diffusion, le processus de messagerie certifié reçoit un deuxième message certifié comportant une séquence chiffrée indiquant qu'un précédant message certifié a été envoyé par le programme de diffusion mais n'a pas été reçu par le programme de gestion de liste d'abonnés, et dans lequel le processus certifié communique une demande de confirmation certifié au programme de diffusion, la requête certifiée de confirmation comportant une séquence chiffrée qui est associés à un message certifié que le registre de diffusion indique comme ayant été reçue préalablement parle programme de gestion de liste d'abonnés.

21. Système selon la revendication dans lequel le registre de diffusion est sous forme d'un fichier de diffusion et la session certifiée de messagerie est ouverte en continu jusqu'à ce que le programme de diffusion ou le programme de gestion de liste d'abonnés ait été terminé et redémarré.
